# EUROPEAN PATENT APPLICATION

(11) **EP 4 572 185 A1**
(43) Date of publication of application: **18.06.2025**
(21) Application number: 23861986.0
(22) Date of filing: 27.06.2023
(51) Int. Cl.: H04B 10/29, H04B 10/077

(54) **COMMUNICATION PROCESSING METHOD AND RELATED APPARATUS**

(30) Priority: 06.09.2022 CN 202211084391
(71) Applicant: Huawei Technologies Co., Ltd., Shenzhen, Guangdong 518129 (CN)
(72) Inventor: LIU, Sidi, Shenzhen, Guangdong 518129 (CN); ZENG, Xiaofei, Shenzhen, Guangdong 518129 (CN); JIAO, Xiaolong, Shenzhen, Guangdong 518129 (CN)
(74) Representative: Isarpatent
(86) International application number: PCT/CN2023/102640
(87) International publication number: WO 2024/051285

(57) **Abstract**

Embodiments of this application disclose a communication processing method and a related apparatus, to improve data transmission performance and improve stability of a PON system. The method in embodiments of this application includes: A first optical-electrical-optical converter OEO receives a ranging packet of an optical network unit ONU at a first moment. The first OEO sends the ranging packet to a next-level OEO of the first OEO or an optical line termination OLT after a delay of M bits or a delay of first duration from the first moment based on a jitter elimination parameter of the first OEO, where the ranging packet is used by the OLT to determine an equalization delay EQD corresponding to the ONU, the jitter elimination parameter of the first OEO is used to eliminate a delay jitter caused by the first OEO from receiving data to sending data, the OLT is connected to the ONU through N levels of OEOs, the first OEO is one of the N levels of OEOs, M is an integer greater than or equal to 1, and N is an integer greater than or equal to 1.

## Description

This application claims priority to Chinese Patent Application No. 202211084391.0, filed with the China National Intellectual Property Administration on September 6, 2022 and entitled "COMMUNICATION PROCESSING METHOD AND RELATED APPARATUS", which is incorporated herein by reference in its entirety.

### TECHNICAL FIELD

This application relates to the field of optical communication, and in particular, to a communication processing method and a related apparatus.

### BACKGROUND

With the large-scale construction of fiber to the X (fiber to The X, FTTX) networks, passive optical network (passive optical network, PON) technologies are widely used, for example, fiber to the building, fiber to the home, and fiber to the room. A PON network includes an optical line termination (optical line termination, OLT), an optical distribution network (optical distribution network, ODN), and an optical network unit (optical network unit, ONU). The OLT, which is a central office device deployed in a provider's equipment room, aggregates data of a plurality of ONUs for processing. All devices deployed in the ODN are passive devices, for example, optical splitters. The passive devices provide an optical fiber transmission channel for data sending and receiving between the OLT and the ONU. The ONU, which is a user-side terminal device, provides home data, voice, multimedia access, and other functions.

In the PON network, a transmission distance between the OLT and the ONU is subject to transmit optical power, optical fiber loss, optical splitter loss, receiver sensitivity, optical module dispersion, and other parameters. Currently, an optical-electrical-optical converter (optical-electrical-optical converter, OEO) is deployed in the PON network to lengthen the transmission distance of the PON network. The OEO converts a received optical signal into an electrical signal for processing. Then, the OEO converts a processed electrical signal into an optical signal, and sends the optical signal. However, due to factors such as a clock phase, devices, environment, and temperature, there is a delay jitter from receiving the optical signal by the OEO to sending the optical signal by the OEO, and delay jitters accumulate after a plurality of levels of OEOs between the OLT and the ONU, resulting in a large delay jitter in the optical signal received by the OLT.

Therefore, how to eliminate the delay jitter caused from receiving the optical signal by the OEO to sending the optical signal by the OEO, to improve communication transmission performance and improve stability of a PON system is an urgent problem to be resolved.

### SUMMARY

This application provides a communication processing method and a related apparatus, to improve data transmission performance and improve stability of a PON system.

A first aspect of this application provides a communication processing method. The method includes:

A first OEO receives a ranging packet of an ONU at a first moment. Then, the first OEO sends the ranging packet to a next-level OEO of the first OEO or an OLT after a delay of M bits or a delay of first duration from the first moment based on a jitter elimination parameter of the first OEO. The ranging packet is used by the OLT to determine an equalization delay (equalization delay, EQD) corresponding to the ONU. The jitter elimination parameter of the first OEO is used to eliminate a delay jitter caused by the first OEO from receiving data to sending data. The OLT is connected to the ONU through N levels of OEOs, the first OEO is one of the N levels of OEOs, M is an integer greater than or equal to 1, and N is an integer greater than or equal to 1.

In the foregoing technical solution, the first OEO delays sending the ranging packet based on the jitter elimination parameter of the first OEO. The ranging packet is used to determine the EQD corresponding to the ONU. The EQD corresponding to the ONU is related to receiving time of the ranging packet received by the OLT. Because the first OEO performs delay processing on the ranging packet, the receiving time at which the OLT receives the ranging packet is delayed. Therefore, the EQD that corresponds to the ONU and that is obtained through calculation by the OLT decreases. In this case, the ONU performs upstream data transmission based on the EQD, upstream data arrives at the first OEO in advance, and this helps the first OEO perform dejitter processing on the upstream data, to eliminate the delay jitter caused by the first OEO. This improves data transmission performance and improves system stability.

According to the first aspect, in a possible implementation, the method further includes: The first OEO receives the jitter elimination parameter of the first OEO from the OLT. In the implementation, the first OEO may obtain the jitter elimination parameter of the first OEO from the OLT, and this helps the first OEO perform delay processing on the ranging packet.

According to the first aspect, in a possible implementation, the jitter elimination parameter of the first OEO is carried in a physical layer operation, administration and maintenance (physical layer operation, administration management, PLOAM) message or an optical network terminal management and control interface (optical network management and control interface, OMCI) message. In the implementation, the jitter elimination parameter of the first OEO may be carried in an existing message with no need to redefine a new message.

According to the first aspect, in a possible implementation, before the first OEO receives the ranging packet of the ONU at the first moment, the method further includes: The first OEO receives first bandwidth map (bandwidth map, BWMAP) information from the OLT. The first BWMAP information includes at least one of the following: an upstream grant identifier of the ONU, a flag indicating whether a packet to be sent by the ONU carries a payload, start time at which the ONU sends the ranging packet, or stop time at which the ONU sends the ranging packet. Then, the first OEO determines, based on the first BWMAP information, that the ONU is to send the ranging packet. In the implementation, the first OEO first determines, based on the first BWMAP information of the OLT, a type of the packet to be sent by the ONU, and this helps the first OEO process the packet in a corresponding processing manner.

According to the first aspect, in a possible implementation, the method further includes: The first OEO receives an upstream burst frame of the ONU at a second moment. The first OEO buffers a payload in the upstream burst frame into a buffer of the first OEO. The first OEO generates a preamble. The first OEO sends the preamble to the next-level OEO of the first OEO or the OLT at a third moment, and sends the payload in the upstream burst frame to the next-level OEO of the first OEO or the OLT at a fourth moment. A time interval between the third moment and the fourth moment is used by the first OEO to send the preamble, and the second moment is a moment before the fourth moment. The fourth moment is determined based on corresponding start time that is included in second BWMAP information sent by the OLT and at which the ONU sends the payload, and an EQD corresponding to the first OEO.

In the foregoing implementation, the payload in the upstream burst frame arrives at the first OEO in advance, and the first OEO may buffer the payload that arrives in advance into the buffer. The first OEO sends the payload in the upstream burst frame at the fourth moment, and the fourth moment is determined based on the corresponding start time that is included in the second BWMAP information sent by the OLT and at which the ONU sends the payload, and the EQD corresponding to the first OEO. It can be learned that the fourth moment is irrelevant to a moment at which the first OEO receives the payload in the upstream burst frame, to eliminate the delay jitter caused by the first OEO. In addition, before sending the preamble, the first OEO regenerates a preamble, to implement zero preamble losses. In addition, burst interval overheads can be reduced, and a light emitting conflict between the first OEO and an ONU connected to a previous-level OEO can be avoided, thereby improving utilization of upstream bandwidth and stability of a PON system. This avoids a bit error when the OLT decodes the upstream data, avoids an alarm generated by the OLT, and ensures stable running of the PON system.

According to the first aspect, in a possible implementation, a time interval between the second moment and the fourth moment is less than or equal to first duration. In the implementation, advance time by which the payload in the upstream burst frame arrives at the first OEO in advance is less than or equal to the first duration, and the first duration is duration corresponding to the delay jitter indicated by the jitter elimination parameter of the first OEO. This helps the first OEO perform dejitter processing on the payload (that is, the upstream data) in the upstream burst frame, to eliminate the delay jitter caused by the first OEO.

According to the first aspect, in a possible implementation, the method further includes: The first OEO sets a size of the buffer based on the jitter elimination parameter of the first OEO. In the implementation, the payload in the upstream burst frame arrives at the first OEO in advance, and specifically arrives at the first OEO in advance by 0 to M bits, that is, a value of the delay jitter indicated by the jitter elimination parameter of the first OEO. Therefore, the first OEO may set the size of the buffer of the first OEO with reference to the jitter elimination parameter of the first OEO, and this helps the first OEO buffer the upstream data that arrives in advance, to implement the dejitter processing performed by the first OEO on the upstream data.

According to the first aspect, in a possible implementation, the method further includes: The first OEO receives the second BWMAP information from the OLT. The second BWMAP information includes the start time at which the ONU sends the payload in the upstream burst frame. The first OEO determines the fourth moment based on the start time and the EQD corresponding to the first OEO. In the implementation, a specific manner in which the first OEO determines the fourth moment is provided, and this helps the first OEO send the payload at a specified moment, to implement the dejitter processing performed by the first OEO on the payload (that is, the upstream data) in the upstream burst frame.

A second aspect of this application provides a communication processing method. The method includes:
An OLT determines a jitter elimination parameter of a first OEO. The jitter elimination parameter of the first OEO is used to eliminate a delay jitter caused by the first OEO from receiving data to sending data. The OLT is connected to an ONU through N levels of OEOs. The first OEO is one of the N levels of OEOs. N is an integer greater than or equal to 1. The OLT sends the jitter elimination parameter of the first OEO to the first OEO.

In the foregoing technical solution, the OLT may send the jitter elimination parameter of the first OEO to the first OEO, and this helps the first OEO delay sending a ranging packet and perform dejitter processing on upstream data of the ONU, to eliminate the delay jitter caused by the first OEO. This improves communication transmission performance and improves stability of a PON system.

According to the second aspect, in a possible implementation, that an OLT determines a jitter elimination parameter of a first OEO includes: The OLT uses the delay jitter of the first OEO as the jitter elimination parameter of the first OEO; or the OLT uses a largest delay jitter in delay jitters respectively corresponding to the N levels of OEOs as the jitter elimination parameter of the first OEO.

In the implementation, two manners in which the OLT determines the jitter elimination parameter of the first OEO are provided. In manner 1, the OLT uses the delay jitter of the first OEO as the jitter elimination parameter of the first OEO, and this helps the first OEO eliminate, based on the jitter elimination parameter of the first OEO, the delay jitter caused by the first OEO itself, to avoid eliminating an unnecessary delay. In manner 2, the OLT uses the largest delay jitter in the delay jitters respectively corresponding to the N levels of OEOs as the jitter elimination parameter of the first OEO, each level of OEO uses a same jitter elimination parameter, and this helps the OLT deliver the jitter elimination parameter to the OEO.

According to the second aspect, in a possible implementation, the jitter elimination parameter of the first OEO is carried in a PLOAM message or an OMCI message. In the implementation, the jitter elimination parameter of the first OEO may be carried in an existing message with no need to redefine a new message.

A third aspect of this application provides a communication processing method. The method includes:
An OLT receives a ranging packet from an ONU. The OLT determines, based on receiving time at which the OLT receives the ranging packet and a jitter elimination parameter of at least one of N levels of OEOs, an EQD corresponding to the ONU. The jitter elimination parameter of the at least one level of OEO is used to eliminate a delay jitter caused by each of the at least one level of OEO from receiving data to sending data. The OLT is connected to the ONU through the N levels of OEOs, where N is an integer greater than or equal to 1. The OLT sends the EQD corresponding to the ONU to the ONU.

In the foregoing technical solution, the OLT determines, based on the receiving time at which the OLT receives the ranging packet and the jitter elimination parameter of the at least one level of OEO, the EQD corresponding to the ONU. In this way, the EQD that corresponds to the ONU and that is obtained through calculation by the OLT decreases. In this case, the ONU performs upstream data transmission based on the EQD, upstream data arrives at the first OEO in advance, and this helps the first OEO perform dejitter processing on the upstream data, to eliminate the delay jitter caused by the first OEO. This improves data transmission performance and improves system stability.

According to the third aspect, in a possible implementation, that the OLT determines, based on receiving time at which the OLT receives the ranging packet and a jitter elimination parameter of at least one of N levels of OEOs, an EQD corresponding to the ONU includes: The OLT determines a round trip delay (round trip delay, RTD) between the OLT and the ONU based on the receiving time. Then, the OLT subtracts the RTD from transmission time corresponding to a maximum access distance of the OLT, and then subtracts a sum of delay jitters respectively indicated by at least one level of jitter elimination parameter, to obtain the EQD corresponding to the ONU. In the implementation, a specific process in which the OLT determines, with reference to the jitter elimination parameter of the at least one level of OEO, the EQD corresponding to the ONU is shown. It can be learned from the foregoing calculation manner that the EQD that corresponds to the ONU and that is obtained through calculation by the OLT decreases. In this case, the ONU performs upstream data transmission based on the EQD, upstream data arrives at the first OEO in advance, and this helps the first OEO perform dejitter processing on the upstream data, to eliminate the delay jitter caused by the first OEO. This improves data transmission performance and improves system stability.

According to the third aspect, in a possible implementation, the method further includes: The OLT uses the delay jitter corresponding to each of the at least one level of OEO as a jitter elimination parameter corresponding to the OEO, and sends the jitter elimination parameter corresponding to the OEO to the OEO. In the implementation, the OLT uses the delay jitter corresponding to each level of OEO as the jitter elimination parameter of the OEO, so that the OEO eliminates, based on the jitter elimination parameter of the OEO, the delay jitter caused by the OEO itself, to avoid eliminating an unnecessary delay.

According to the third aspect, in a possible implementation, the method further includes: The OLT uses a largest delay jitter in delay jitters respectively corresponding to the at least one level of OEO as a jitter elimination parameter of each of the at least one level of OEO. Then, the OLT sends the jitter elimination parameter of each level of OEO to each level of OEO. In the implementation, the OLT uses the largest delay jitter in the delay jitters corresponding to the at least one level of OEO as the jitter elimination parameter of each of the at least one level of OEO, each level of OEO uses a same jitter elimination parameter, and this helps the OLT deliver the jitter elimination parameter to the OEO.

According to the third aspect, in a possible implementation, the jitter elimination parameter of each of the at least one level of OEO is carried in a PLOAM message or an OMCI message. In the implementation, the jitter elimination parameter of each of the at least one level of OEO may be carried in an existing message with no need to redefine a new message.

A fourth aspect of this application provides a communication processing method. The method includes:
A first OEO receives an upstream burst frame of an ONU at a first moment. Then, the first OEO buffers a payload in the upstream burst frame into a buffer of the first OEO. The first OEO generates a preamble. The first OEO sends the preamble to a next-level OEO of the first OEO or an OLT at a second moment, and sends the payload in the upstream burst frame to the next-level OEO of the first OEO or the OLT at a third moment. A time interval between the second moment and the third moment is used by the first OEO to send the preamble. The first moment is a moment before the third moment, and the third moment is determined based on start time that is included in first BWMAP information sent by the OLT and at which the ONU sends the payload, and an EQD corresponding to the first OEO. The first OEO is one of N levels of OEOs, and the OLT is connected to the ONU through the N levels of OEOs, where N is an integer greater than or equal to 1.

In the foregoing technical solution, the payload in the upstream burst frame arrives at the first OEO in advance, and the first OEO may buffer the payload that arrives in advance into the buffer. The first OEO sends the payload in the upstream burst frame at the third moment, and the third moment is determined based on the corresponding start time that is included in the first BWMAP information sent by the OLT and at which the ONU sends the payload, and the EQD corresponding to the first OEO. It can be learned that the third moment is irrelevant to a moment at which the first OEO receives the payload in the upstream burst frame, to eliminate a delay jitter caused by the first OEO. In addition, before sending the preamble, the first OEO regenerates a preamble, to implement zero preamble losses. In addition, burst interval overheads can be reduced, and a light emitting conflict between the first OEO and an ONU connected to a previous-level OEO can be avoided, thereby improving utilization of upstream bandwidth and stability of a PON system. This avoids a bit error when the OLT decodes upstream data, avoids an alarm generated by the OLT, and ensures stable running of the PON system.

According to the fourth aspect, in a possible implementation, a time interval between the first moment and the third moment is less than or equal to first duration, and the first duration is duration corresponding to a delay jitter indicated by a jitter elimination parameter of the first OEO. In the implementation, advance time by which the payload in the upstream burst frame arrives at the first OEO in advance is less than or equal to the first duration, and the first duration is duration corresponding to the delay jitter indicated by the jitter elimination parameter of the first OEO. This helps the first OEO perform dejitter processing on the payload (that is, the upstream data) in the upstream burst frame, to eliminate the delay jitter caused by the first OEO.

According to the fourth aspect, in a possible implementation, before the first OEO sends the preamble to the next-level OEO of the first OEO or the OLT at the second moment, and sends the payload in the upstream burst frame to the next-level OEO of the first OEO or the OLT at the third moment, the method further includes: The first OEO receives the first BWMAP information from the OLT, where the first BWMAP information includes the corresponding start time at which the ONU sends the payload. Then, the first OEO determines the third moment based on the start time and the EQD corresponding to the first OEO. In the implementation, a specific manner in which the first OEO determines the third moment is provided, and this helps the first OEO send the payload at a specified moment, to implement the dejitter processing performed by the first OEO on the payload (that is, the upstream data) in the upstream burst frame.

According to the fourth aspect, in a possible implementation, the method further includes: The first OEO receives the jitter elimination parameter of the first OEO from the OLT. The first OEO sets a size of the buffer based on the jitter elimination parameter of the first OEO. In the implementation, the payload in the upstream burst frame arrives at the first OEO in advance, and specifically arrives at the first OEO in advance by 0 to M bits, that is, a value of the delay jitter indicated by the jitter elimination parameter of the first OEO. Therefore, the first OEO may set the size of the buffer of the first OEO with reference to the jitter elimination parameter of the first OEO, and this helps the first OEO buffer the upstream data that arrives in advance, to implement the dejitter processing performed by the first OEO on the upstream data.

A fifth aspect of this application provides an optical communication apparatus, including: a receiving module, configured to receive a ranging packet of an ONU at a first moment; and a sending module, configured to send the ranging packet to a next-level OEO of the optical communication apparatus or an OLT after a delay of M bits or a delay of first duration from the first moment based on a jitter elimination parameter of the optical communication apparatus, where the ranging packet is used by the OLT to determine an EQD corresponding to the ONU, the jitter elimination parameter of the optical communication apparatus is used to eliminate a delay jitter caused by the optical communication apparatus from receiving data to sending data, the OLT is connected to the ONU through N levels of OEOs, the optical communication apparatus is one of the N levels of OEOs, M is an integer greater than or equal to 1, and N is an integer greater than or equal to 1.

According to the fifth aspect, in a possible implementation, the receiving module is further configured to:
receive the jitter elimination parameter of the optical communication apparatus from the OLT.

According to the fifth aspect, in a possible implementation, the jitter elimination parameter of the optical communication apparatus is carried in a PLOAM message or an OMCI message.

According to the fifth aspect, in a possible implementation, the receiving module is further configured to receive first BWMAP information from the OLT, where the first BWMAP information includes at least one of the following: an upstream grant identifier of the ONU, a flag indicating whether a packet to be sent by the ONU carries a payload, start time at which the ONU sends the ranging packet, or stop time at which the ONU sends the ranging packet. The optical communication apparatus further includes a determining module. The determining module is configured to determine, based on the first BWMAP information, that the ONU is to send the ranging packet.

According to the fifth aspect, in a possible implementation, the receiving module is further configured to receive an upstream burst frame of the ONU at a second moment. The optical communication apparatus further includes a buffering module and a generation module. The buffering module is configured to buffer a payload in the upstream burst frame into a buffer of the optical communication apparatus. The generation module is configured to generate a preamble. The sending module is further configured to: send the preamble to the next-level OEO of the optical communication apparatus or the OLT at a third moment, and send the payload in the upstream burst frame to the next-level OEO of the optical communication apparatus or the OLT at a fourth moment, where a time interval between the third moment and the fourth moment is used by the optical communication apparatus to send the preamble, the second moment is a moment before the fourth moment, and the fourth moment is determined based on start time that is in second BWMAP information sent by the OLT and that is used to indicate that the ONU sends the payload, and an EQD corresponding to the optical communication apparatus.

According to the fifth aspect, in a possible implementation, a time interval between the second moment and the fourth moment is less than or equal to the first duration.

According to the fifth aspect, in a possible implementation, the optical communication apparatus further includes a setting module. The setting module is configured to set a size of the buffer based on the jitter elimination parameter of the optical communication apparatus.

According to the fifth aspect, in a possible implementation, the receiving module is further configured to receive the second BWMAP information from the OLT, where the second BWMAP information includes the start time at which the ONU sends the payload in the upstream burst frame. The optical communication apparatus further includes the determining module. The determining module is configured to determine the fourth moment based on the start time at which the ONU sends the payload in the upstream burst frame and the EQD corresponding to the optical communication apparatus.

A sixth aspect of this application provides an optical communication apparatus, including: a determining module, configured to determine a jitter elimination parameter of a first OEO, where the jitter elimination parameter of the first OEO is used to eliminate a delay jitter caused by the first OEO from receiving data to sending data, the optical communication apparatus is connected to an ONU through N levels of OEOs, the first OEO is one of the N levels of OEOs, and N is an integer greater than or equal to 1; and a sending module, configured to send the jitter elimination parameter of the first OEO to the first OEO.

According to the sixth aspect, in a possible implementation, the determining module is specifically configured to: use the delay jitter of the first OEO as the jitter elimination parameter of the first OEO; or use a largest delay jitter in delay jitters respectively corresponding to the N levels of OEOs as the jitter elimination parameter of the first OEO.

According to the sixth aspect, in a possible implementation, the jitter elimination parameter of the first OEO is carried in a PLOAM message or an OMCI message.

A seventh aspect of this application provides an optical communication apparatus, including: a receiving module, configured to receive a ranging packet from an ONU; a determining module, configured to determine, based on receiving time at which the optical communication apparatus receives the ranging packet and a jitter elimination parameter of at least one of N levels of OEOs, an EQD corresponding to the ONU, where the jitter elimination parameter of the at least one level of OEO is used to eliminate a delay jitter caused by each of the at least one level of OEO from receiving data to sending data, the optical communication apparatus is connected to the ONU through the N levels of OEOs, and N is an integer greater than or equal to 1; and a sending module, configured to send the EQD corresponding to the ONU to the ONU.

According to the seventh aspect, in a possible implementation, the determining module is specifically configured to: determine an RTD between the optical communication apparatus and the ONU based on the receiving time; and subtract the RTD from transmission time corresponding to a maximum access distance of the optical communication apparatus, and then subtract a sum of delay jitters respectively indicated by at least one level of jitter elimination parameter, to obtain the EQD corresponding to the ONU.

According to the seventh aspect, in a possible implementation, the determining module is further configured to use the delay jitter corresponding to each of the at least one level of OEO as a jitter elimination parameter corresponding to the OEO. The sending module is further configured to send the jitter elimination parameter corresponding to the OEO to the OEO.

According to the seventh aspect, in a possible implementation, the determining module is further configured to use a largest delay jitter in delay jitters respectively corresponding to the at least one level of OEO as a jitter elimination parameter corresponding to each of the at least one level of OEO. The sending module is further configured to send the jitter elimination parameter corresponding to each level of OEO to each level of OEO.

According to the seventh aspect, in a possible implementation, the jitter elimination parameter corresponding to each of the at least one level of OEO is carried in a PLOAM message or an OMCI message.

An eighth aspect of this application provides an optical communication apparatus, including: a receiving module, configured to receive an upstream burst frame of an ONU at a first moment; a buffering module, configured to buffer a payload in the upstream burst frame into a buffer of the optical communication apparatus; a generation module, configured to generate a preamble; and a sending module, configured to: send the preamble to a next-level OEO of the optical communication apparatus or an OLT at a second moment, and send the payload in the upstream burst frame to the next-level OEO of the optical communication apparatus or the OLT at a third moment, where a time interval between the second moment and the third moment is used by the optical communication apparatus to send the preamble, the first moment is a moment before the third moment, the third moment is determined based on start time that is included in first BWMAP information sent by the OLT and at which the ONU sends the payload, and an EQD corresponding to the optical communication apparatus, the optical communication apparatus is one of N levels of OEOs, the OLT is connected to the ONU through the N levels of OEOs, and N is an integer greater than or equal to 1.

According to the eighth aspect, in a possible implementation, a time interval between the first moment and the third moment is less than or equal to first duration, and the first duration is duration corresponding to a delay jitter indicated by a jitter elimination parameter of the optical communication apparatus.

According to the eighth aspect, in a possible implementation, the receiving module is further configured to receive the first BWMAP information from the OLT, where the first BWMAP information includes the start time at which the ONU sends the payload. The optical communication apparatus further includes a determining module. The determining module is configured to determine the third moment based on the start time at which the ONU sends the payload and the EQD corresponding to the optical communication apparatus.

According to the eighth aspect, in a possible implementation, the receiving module is further configured to receive the jitter elimination parameter of the optical communication apparatus from the OLT. The optical communication apparatus further includes a setting module. The setting module is configured to set a size of the buffer based on the jitter elimination parameter of the optical communication apparatus.

A ninth aspect of this application provides an optical communication apparatus, including a processor. The processor is configured to invoke and run a computer program stored in a memory, to enable the processor to implement any implementation of any one of the first aspect to the fourth aspect.

Optionally, the optical communication apparatus further includes a transceiver. The processor is further configured to control the transceiver to receive and send a signal.

Optionally, the optical communication apparatus includes the memory, and the memory stores the computer program.

A tenth aspect of this application provides an optical communication system, including an OLT, an ONU, and N levels of OEOs. The OLT is connected to the ONU through the N levels of OEOs, N is an integer greater than or equal to 1, and at least one of the N levels of OEOs performs the method according to any implementation of the first aspect.

According to the tenth aspect, in a possible implementation, the OLT performs the method according to any implementation of the second aspect.

An eleventh aspect of this application provides an optical communication system, including an OLT, an ONU, and N levels of OEOs. The OLT is connected to the ONU through the N levels of OEOs, N is an integer greater than or equal to 1, the OLT performs the method according to any implementation of the third aspect, and at least one of the N levels of OEOs performs the method according to any implementation of the fourth aspect.

A twelfth aspect of this application provides a chip. The chip includes a processor. The processor is configured to invoke computer instructions or a computer program stored in a memory, to perform the method according to any implementation of any one of the first aspect to the fourth aspect.

According to the twelfth aspect, in a possible implementation, the chip further includes the memory, and the memory and the processor are interconnected through a line.

A thirteenth aspect of this application provides a computer-readable storage medium, including instructions. When the instructions are run on a computer, the computer is enabled to perform the method according to any implementation of any one of the first aspect to the fourth aspect.

A fourteenth aspect of this application provides a computer program product including instructions. When the computer program product runs on a computer, the computer is enabled to perform the method according to any implementation of any one of the first aspect to the fourth aspect.

It can be learned from the foregoing technical solutions that embodiments of this application have the following advantages:
In the foregoing technical solutions, a first OEO receives a ranging packet of an ONU at a first moment. After the first OEO receives the ranging packet, the first OEO sends the ranging packet to a next-level OEO of the first OEO or an OLT after a delay of M bits or a delay of first duration from the first moment based on a jitter elimination parameter of the first OEO. The ranging packet is used by the OLT to determine an equalization delay EQD corresponding to the ONU. The jitter elimination parameter of the first OEO is used to eliminate a delay jitter caused by the first OEO from receiving data to sending data. Because the first OEO performs delay processing on the ranging packet, the EQD that corresponds to the ONU and that is obtained through calculation by the OLT decreases. Therefore, the ONU performs subsequent upstream data transmission based on the EQD, upstream data arrives at the first OEO in advance, and this helps the first OEO perform dejitter processing on the upstream data, to eliminate the delay jitter caused by the first OEO. This improves data transmission performance and improves system stability.

### BRIEF DESCRIPTION OF DRAWINGS

FIG. 1 is a diagram of a communication system to which an embodiment of this application is applied;
FIG. 2 is a diagram of a structure of a downstream gigabit passive optical network transmission convergence (GPON transmission convergence, GTC) frame according to an embodiment of this application;
FIG. 3 is a diagram of a structure of a BWMAP field in a downstream GTC frame according to an embodiment of this application;
FIG. 4 is a diagram of a ranging procedure according to an embodiment of this application;
FIG. 5 is a diagram of upstream data transmission according to an embodiment of this application;
FIG. 6 is a diagram of a communication processing method according to an embodiment of this application;
FIG. 7 is another diagram of a communication processing method according to an embodiment of this application;
FIG. 8 is another diagram of upstream data transmission according to an embodiment of this application;
FIG. 9 is a diagram of a first structure of an optical communication apparatus according to an embodiment of this application;
FIG. 10 is a diagram of a second structure of an optical communication apparatus according to an embodiment of this application;
FIG. 11 is a diagram of a third structure of an optical communication apparatus according to an embodiment of this application;
FIG. 12 is a diagram of a fourth structure of an optical communication apparatus according to an embodiment of this application; and
FIG. 13 is a diagram of a fifth structure of an optical communication apparatus according to an embodiment of this application.

### DESCRIPTION OF EMBODIMENTS

This application provides a communication processing method and a related apparatus, to improve data transmission performance and improve stability of a PON system.

The following describes the technical solutions in embodiments of this application with reference to the accompanying drawings in embodiments of this application. It is clear that the described embodiments are merely some but not all of embodiments of this application. All other embodiments obtained by persons skilled in the art based on embodiments of this application without creative efforts shall fall within the protection scope of this application.

Reference to "an embodiment", "some embodiments", or the like described in this application indicates that one or more embodiments of this application include a specific feature, structure, or characteristic described with reference to the embodiment. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "including but not limited to", unless otherwise specifically emphasized in another manner.

In descriptions of this application, unless otherwise specified, "/" means "or". For example, A/B may indicate A or B. The term "and/or" in this specification describes only an association relationship for describing associated objects and represents that three relationships may exist. For example, A and/or B may represent the following three cases: Only A exists, both A and B exist, and only B exists. In addition, "at least one" means one or more, and "a plurality of" means two or more. "At least one of the following items (pieces)" or a similar expression thereof indicates any combination of these items, including a single item (piece) or any combination of a plurality of items (pieces). For example, at least one of a, b, or c may represent a, b, c, a and b, a and c, b and c, or a, b, and c. a, b, and c may be singular or plural.

The method provided in this application may be applied to an optical fiber access network, for example, a passive optical network (passive optical network, PON). The method provided in this application may be further applied to a wavelength division multiplexing network, an optical transport network (optical transport network, OTN), and the like. This is not specifically limited in this application. The following mainly describes the technical solutions in this application by using an example in which the method provided in this application is applied to the optical fiber access network.

With the large-scale construction of FTTX networks, PON technologies are widely used, for example, fiber to the building, fiber to the home, and fiber to the room. The PON network includes an optical line termination (optical line termination, OLT), an optical distribution network (optical distribution network, ODN), and an optical network unit (optical network unit, ONU). The OLT, which is a central office device deployed in a provider's equipment room, may send data to the ONU through the ODN network and aggregate data of a plurality of ONUs for processing. All devices deployed in the ODN are passive devices, for example, optical splitters. The passive devices provide an optical fiber transmission channel for data sending and receiving between the OLT and the ONU. The ONU, which is a user-side terminal device, provides home data, voice, multimedia access, and other functions.

In the PON network, a transmission distance between the OLT and the ONU is subject to transmit optical power, optical fiber loss, optical splitter loss, receiver sensitivity, optical module dispersion, and other parameters. Currently, in the PON, a maximum transmission distance between the OLT and the ONU is 60 kilometers. In emerging distance industrial application scenarios, it is urgent to break through such a transmission bottleneck of 60 kilometers.

Currently, an optical-electrical-optical converter (optical-electrical-optical converter, OEO) is deployed in the PON network to lengthen the transmission distance of the PON network. The OEO is configured to: compensate for a loss of an optical signal, eliminate signal distortion, eliminate impact of noise on the optical signal, and the like in a long-distance optical fiber communication system. Specifically, the OEO converts the optical signal into an electrical signal, and then converts the electrical signal into an optical signal, for regeneration, amplification, and shaping of the optical signal, so as to lengthen a transmission distance of an optical fiber.

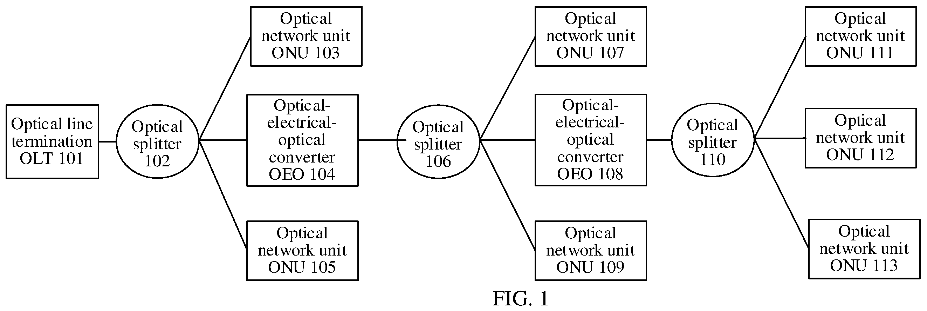

With reference to FIG. 1, the following describes a possible communication system to which this application is applicable.

FIG. 1 is a diagram of a communication system according to an embodiment of this application. Refer to FIG. 1. A PON network includes an OLT 101, a plurality of ONUs, a plurality of optical splitters, and a plurality of OEOs. For example, the PON network includes the OLT 101, an optical splitter 102, an ONU 103, an OEO 104, an ONU 105, an optical splitter 106, an ONU 107, an OEO 108, an ONU 109, an optical splitter 110, an ONU 111, an ONU 112, and an ONU 113.

The OLT 101 implements communication transmission with the plurality of ONUs through the plurality of optical splitters and the plurality of OEOs.

It should be noted that the communication system shown in FIG. 1 is merely an example. In actual application, the PON network includes at least one ONU, at least one optical splitter, and at least one OEO.

The OEO converts a received optical signal into an electrical signal, and processes the electrical signal. Then, the OEO converts a processed electrical signal into an optical signal, and sends the optical signal. However, due to factors such as a clock phase, devices, environment, temperature, and the like, there is a delay jitter from receiving the optical signal by the OEO to sending the optical signal by the OEO, and delay jitters accumulate after a plurality of levels of OEOs between the OLT and the ONU, resulting in a large delay jitter in the optical signal received by the OLT.

In the PON network, the OLT receives upstream data from the ONU in a time division multiplexing manner. Ideally, the upstream data should arrive at the OLT strictly based on a moment allocated by using BWMAP information delivered by the OLT. The OLT may accurately find a frame header location of the upstream data of the ONU based on the moment allocated by using the BWMAP information. However, when there is a jitter in the upstream data, the OLT cannot receive the upstream data at a precise moment, resulting in a loss of the upstream data. In addition, the jitter in the upstream data causes overlapping of upstream data sent by different ONUs to the OLT, and then causes a bit error. This finally causes transmission interference warning (transmission interference warning, TIW), drift of window (drift of window, DOW), loss of frame of ONUi (loss of frame of ONUi, LOFI) , or the like generated by the OLT, affecting stability of a PON system.

Therefore, how to eliminate the delay jitter caused by the OEO from receiving the optical signal to sending the optical signal, to improve system performance is an urgent problem to be resolved.

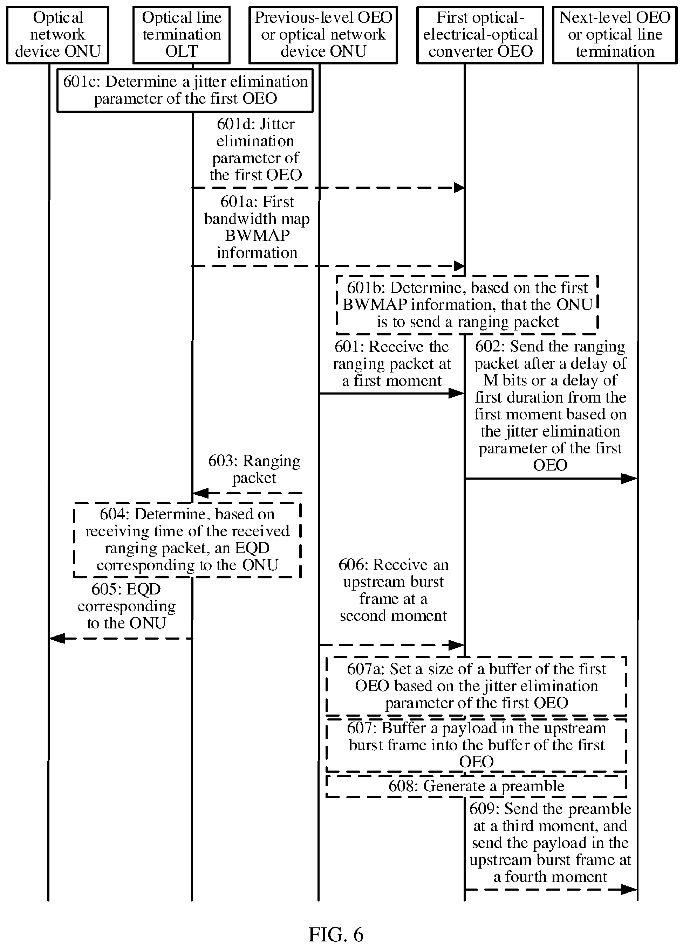

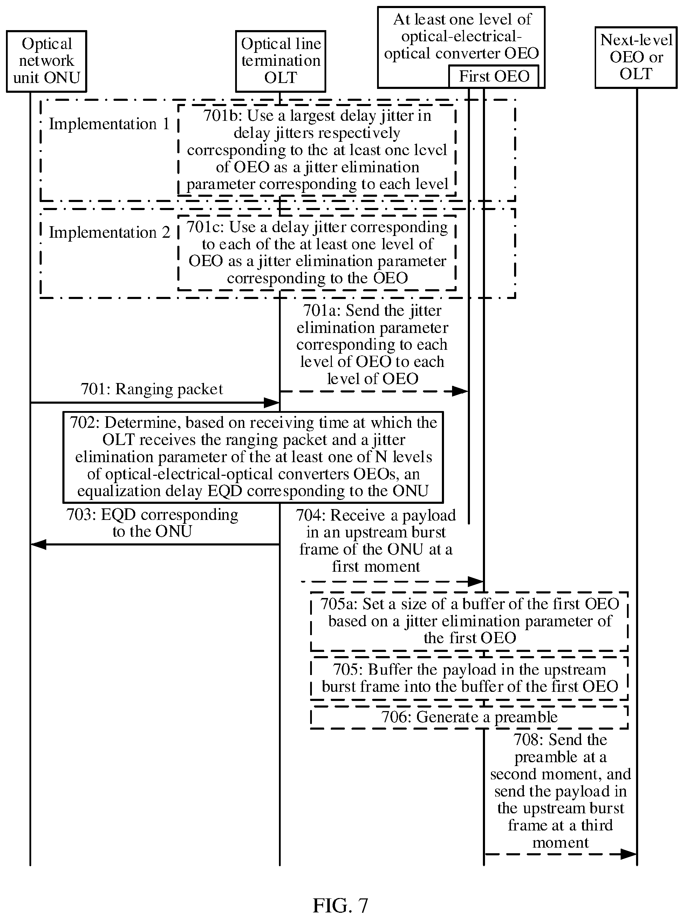

This application provides corresponding technical solutions, so that the OEO performs dejitter processing on the upstream data, to eliminate the delay jitter caused by the OEO. This improves data transmission performance and improves system stability. This application provides two possible implementations of determining, based on a jitter elimination parameter of the OEO, an EQD corresponding to the ONU. For details, refer to related descriptions of embodiments shown in FIG. 6 and FIG. 7. The ONU obtains the EQD corresponding to the ONU, and transmits the upstream data based on the EQD corresponding to the ONU. In an upstream data transmission process of the ONU, the OEO performs dejitter processing on the upstream data. For details, refer to the related descriptions of the embodiments shown in FIG. 6 and FIG. 7.

The following describes some related technical backgrounds in this application.

To prevent a data conflict or collision, the OLT needs to be able to accurately measure a distance between the OLT and each ONU, to provide an appropriate slot to assist upstream transmission of data. Therefore, the ONU can send data in a specified slot, to prevent an upstream data conflict. The OLT may determine the distance between the OLT and the ONU by using a ranging procedure.

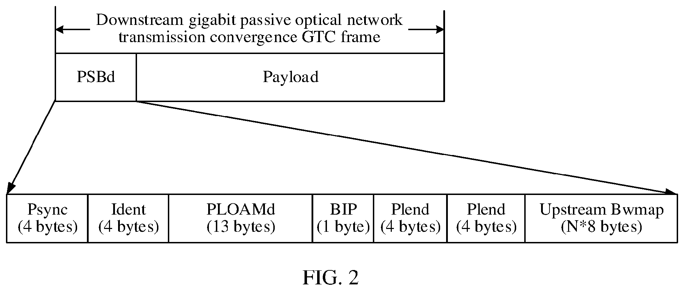

The OLT may cyclically send a downstream GTC frame at a periodicity of 125 µs (microseconds). The following first describes the downstream GTC frame. FIG. 2 is a diagram of a structure of a downstream GTC frame according to an embodiment of this application. Transmission time of each downstream GTC frame is 125 µs. As shown in FIG. 2, the downstream GTC frame includes a physical synchronization block downstream (physical synchronization block downstream, PSBd) frame header and a payload. The PSBd frame header includes a physical synchronization (physical synchronization, Psync) field, an identifier (identifier, Ident) field, a physical layer operation, an administration and maintenance downstream (physical layer operation, administration and maintenance downstream, PLOAMd) field, a bit interleaved parity (bit interleaved parity, BIP) field, two payload length downstream (payload length downstream, Plend) fields, and an upstream bandwidth map (Upstream Bwmap) field. The Psync field may also be referred to as a Psync codeword, and a value of the Psync field is a fixed value 0xB6AB31E0. The OEO and the ONU may search the Psync codeword for a start time domain position in which the frame header of the downstream GTC frame is located.

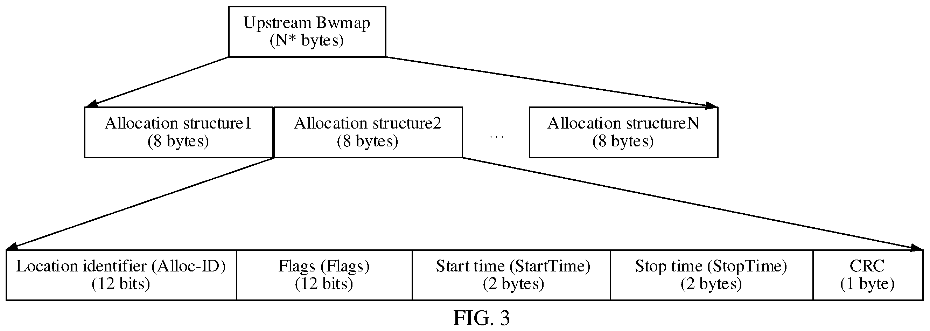

The following describes a structure of the upstream Bwmap field with reference to FIG. 3. As shown in FIG. 3, the upstream Bwmap field includes a plurality of allocation structure fields. Each ONU corresponds to one allocation structure field. For example, an allocation structure2 field includes an upstream grant identifier (Alloc-ID) subfield, a flags (Flags) subfield, a start time (StartTime) subfield, a stop time (StopTime) subfield, and a cyclic redundancy check (cyclic redundancy check, CRC) subfield.

The upstream grant identifier subfield indicates an ONU to which bandwidth is allocated. The flags subfield indicates whether a packet to be sent by the ONU carries a payload. The start time subfield, which is typically referred to as StartTime, indicates start time at which the ONU sends the packet. The stop time subfield indicates corresponding stop time at which the ONU sends the packet. Content included in the allocation structure2 field may be understood as BWMAP information of the ONU.

The following describes the ranging procedure between the OLT and the ONU.

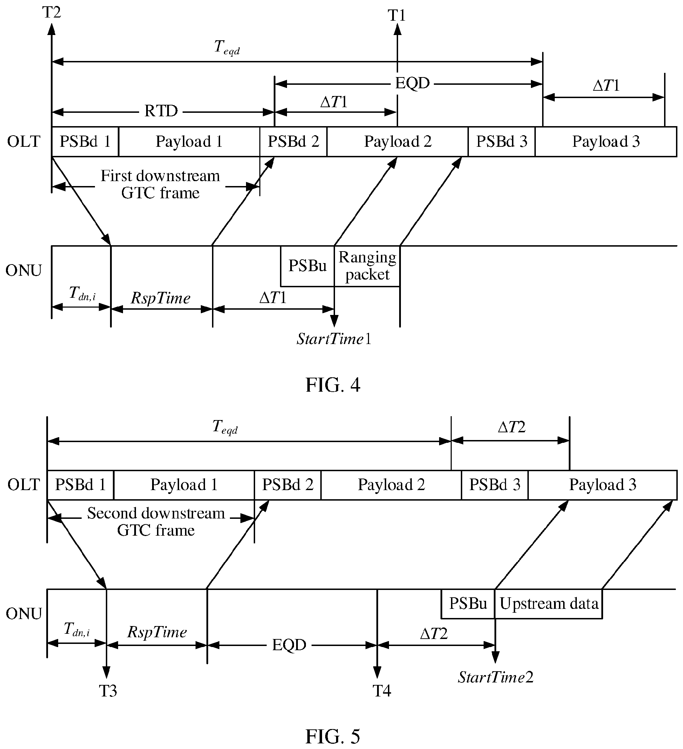

For example, as shown in FIG. 4, the OLT sends a first downstream GTC frame to the ONU. The ONU receives the first downstream GTC frame from the OLT. The ONU may determine, by using the first downstream GTC frame, start time (StartTime1) at which the ONU sends a ranging packet. The ONU sends the ranging packet to the OLT after a delay of response time (Rsptime) and Δ*T*1 from a receiving moment at which the ONU receives the first downstream GTC frame. Herein, StartTime1 is absolute time obtained through calculation starting from 00:00. Optionally, Δ*T*1 is equal to a time interval between StartTime1 and 00:00. The response time may be preconfigured. The OLT and the ONU are connected through N levels of OEOs. After each of the N levels of OEOs receives the ranging packet, the OEO directly forwards the ranging packet to a next-level OEO or the OLT. The OLT determines a round trip delay (round trip delay, RTD) between the OLT and the ONU based on receiving time T1 of the ranging packet, sending start time T2 at which the OLT sends the first downstream GTC frame, and Δ*T*1. For example, as shown in FIG. 4, RTD=T1-T2- Δ*T*1.

A plurality of ONUs connected to the OLT are equivalent in a same logical distance, that is, upstream data sent by the plurality of ONUs may arrive at the OLT at the same time. For example, a maximum access distance of the OLT is 20 kilometers, and the OLT may determine, based on transmission time *T_{eqd}* corresponding to the maximum access distance and the RTD between the OLT and the ONU, the EQD corresponding to the ONU. Then, the ONU sends the EQD corresponding to the ONU to the ONU. As shown in FIG. 4, the EQD corresponding to the ONU is equal to *T_{eqd}* minus the RTD. For example, a distance between an ONU 0 and the OLT is 10 kilometers, and a distance between an ONU 1 and the OLT is 5 kilometers. Through adjustment of an EQD corresponding to each ONU, data sent by the ONU 0 and the ONU 1 and data sent by an ONU that is 20 kilometers away from the OLT arrive at the OLT at the same time, to ensure that in a time division multiplexing system, upstream data sent by different ONUs does not conflict or collide.

The following describes a process in which the ONU sends an upstream burst frame to the OLT.

After determining, by using the foregoing ranging procedure, the EQD corresponding to the ONU, the OLT sends the EQD corresponding to the ONU to the ONU. As shown in FIG. 5, the ONU sends the upstream burst frame to the OLT based on the EQD. The upstream burst frame includes a physical synchronization block upstream (physical synchronization block upstream, PSBu) frame header (also referred to as a preamble) and upstream data (also referred to as a payload). As shown in FIG. 5, the ONU receives a second downstream GTC frame at a moment T3. The ONU determines, by using the second downstream GTC frame, start time at which the ONU sends the upstream data, where the start time may also be referred to as StartTime2. It should be noted that StartTime2 is within 125 µs in which the ONU sends the upstream burst frame. Herein, StartTime2 is absolute time obtained through calculation starting from 00:00. A moment T4 in FIG. 5 may be understood as a start moment of the 125 µs in which the ONU sends the upstream burst frame. Optionally, a time interval between StartTime2 and 00:00 is equal to Δ*T*2*.* Optionally, the time interval between StartTime2 and 00:00 is equal to the time interval between StartTime1 and 00:00. The ONU sends the upstream data carried in the upstream burst frame to the OLT after a delay of the response time, the EQD, and Δ*T*2 from the moment T3 (that is, at StartTime2 shown in FIG. 5). The ONU may send the PSBu frame header (that is, the preamble) in the upstream burst frame before StartTime2. The OLT and the ONU are connected through the N levels of OEOs, and the N levels of OEOs are connected in a cascading manner. After receiving the upstream burst frame, each of the N levels of OEOs may send the upstream burst frame to the next-level OEO or the OLT.

However, in the PON network, upstream transmission is burst (burst) transmission, that is, the optical signal is discontinuous. In a process of converting the optical signal from scratch, the preamble in the upstream burst frame sent by an ONU is consumed when each level of OEO performs power detection and clock recovery. The upstream burst frame includes the PSBu frame header (that is, the preamble) and the upstream data shown in FIG. 5. Therefore, each level of OEO loses a part of data in the preamble. More cascaded OEOs cause more preamble losses in the upstream burst frame. As a result, when the upstream burst frame arrives at the OLT, a receive clock cannot be quickly and accurately locked through upstream receive burst clock data recovery (burst clock data recovery, BCDR) of the OLT, causing a bit error. Therefore, how to avoid the data loss in the preamble of the upstream burst frame, to improve communication transmission performance and avoid the bit error is a problem to be resolved in this application. For details, refer to the related descriptions of the embodiments shown in FIG. 6 and FIG. 7.

The technical solutions in this application are described below with reference to specific embodiments.

FIG. 6 is a diagram of an embodiment of a communication processing method according to an embodiment of this application. Refer to FIG. 6. The method includes the following steps.

601: A first OEO receives a ranging packet of an ONU at a first moment.

The ONU is connected to an OLT through N levels of OEOs, and the N levels of OEOs are connected in a cascading manner, where N is an integer greater than or equal to 1. The first OEO is one of the N levels of OEOs.

If the first OEO is a 1^{st}-level OEO in the N levels of OEOs, the first OEO receives the ranging packet from the ONU. For example, as shown in FIG. 1, the OLT 101 and the ONU 111 are connected through two levels of OEOs, where a 1^{st}-level OEO is the OEO 108, and a 2^{nd}-level OEO is the OEO 104. For example, the first OEO is the OEO 108, that is, the first OEO is the 1^{st}-level OEO. The ONU 111 sends the ranging packet to the OEO 108 through the optical splitter 110. Correspondingly, the OEO 108 may receive the ranging packet from the ONU 111.

If the first OEO is not a 1^{st}-level OEO in the N levels of OEOs, the first OEO receives the ranging packet from a previous-level OEO of the first OEO. For example, as shown in FIG. 1, the OLT 101 and the ONU 111 are connected through two levels of OEOs, where a 1^{st}-level OEO is the OEO 108, and a 2^{nd}-level OEO is the OEO 104. For example, the first OEO is the OEO 104, that is, the first OEO is the 2^{nd}-level OEO. The ONU 111 sends the ranging packet to the OEO 108 through the optical splitter 110. Then, the OEO 108 sends the ranging packet to the OEO 104 through the optical splitter 106. Correspondingly, the OEO 104 receives the ranging packet from the OEO 108.

The ranging packet is used by the OLT to determine an EQD corresponding to the ONU. In this embodiment, for calculating, by the OLT, the EQD corresponding to the ONU, refer to related descriptions in step 602.

602: The first OEO sends the ranging packet to a next-level OEO of the first OEO or the OLT after a delay of M bits or a delay of first duration from the first moment based on a jitter elimination parameter of the first OEO.

The ranging packet is used by the OLT to determine the EQD corresponding to the ONU. The jitter elimination parameter of the first OEO is used to eliminate a delay jitter caused by the first OEO from receiving data to sending data. M is an integer greater than or equal to 1.

The jitter elimination parameter of the first OEO indicates the delay jitter caused by the first OEO from receiving the data to sending the data. For example, the jitter elimination parameter of the first OEO includes the M bits or the first duration of the delay jitter caused by the first OEO from receiving the data to sending the data. After the first OEO receives the ranging packet at the first moment, the first OEO may delay for the M bits or the first duration from the first moment. Then, if the first OEO is not a last-level OEO in the N levels of OEOs, the first OEO sends the ranging packet to a next-level OEO of the first OEO. If the first OEO is a last-level OEO in the N levels of OEOs, the first OEO sends the ranging packet to the OLT.

For example, as shown in FIG. 1, the OLT 101 and the ONU 111 are connected through two levels of OEOs, where a 1^{st}-level OEO is the OEO 108, and a 2^{nd}-level OEO is the OEO 104. For example, the first OEO is the OEO 108, that is, the first OEO is the 1^{st}-level OEO. The ONU 111 sends the ranging packet to the OEO 108 through the optical splitter 110. Correspondingly, the OEO 108 receives the ranging packet of the ONU 111 at the first moment. The OEO 108 sends the ranging packet to the OEO 104 through the optical splitter 106 after the delay of the M bits or the first duration from the first moment.

For example, as shown in FIG. 1, the OLT 101 and the ONU 111 are connected through two levels of OEOs, where a 1^{st}-level OEO is the OEO 108, and a 2^{nd}-level OEO is the OEO 104. For example, the first OEO is the OEO 104, that is, the first OEO is the 2^{nd}-level OEO. The ONU 111 sends the ranging packet to the OEO 108 through the optical splitter 110. Correspondingly, the OEO 108 sends the ranging packet to the OEO 104 through the optical splitter 106. Then, the OEO 104 receives, at the first moment, the ranging packet sent by the OEO 108. The OEO 104 sends the ranging packet to the OLT 101 through the optical splitter 102 after the delay of the M bits or the first duration from the first moment.

The foregoing shows a process in which one (that is, the first OEO) of the N levels of OEOs performs delay processing on the ranging packet. In actual application, another OEO in the N levels of OEOs may also perform a delay processing process on the ranging packet. This is not specifically limited in this application. For example, each of the N levels of OEOs performs a delay processing process on the ranging packet.

Optionally, the embodiment shown in FIG. 6 further includes step 601a and step 601b. Step 601a and step 601b may be performed before step 601.

601a: The OLT sends first BWMAP information to the first OEO. Correspondingly, the first OEO receives the first BWMAP information from the OLT.

The first BWMAP information includes at least one of the following: an upstream grant identifier (Alloc-ID), a flag (Flags) indicating whether a packet to be sent by the ONU carries a payload, start time at which the ONU sends the ranging packet, or stop time at which the ONU sends the ranging packet.

Optionally, the first BWMAP information is carried in a first downstream GTC frame.

Specifically, the OLT sends the first downstream GTC frame to the first OEO, where the first downstream GTC frame includes the first BWMAP information. Correspondingly, the first OEO receives the first downstream GTC frame from the OLT. The first OEO obtains the first BWMAP information by using the first downstream GTC frame.

For example, a structure of the first downstream GTC frame may be shown in FIG. 2. A frame header of the first downstream GTC frame includes an upstream Bwmap field. The upstream Bwmap field includes a plurality of Allocation structure fields. For example, the ONU corresponds to an Allocation structure2 field, and the allocation structure2 field includes an upstream grant identifier (Alloc-ID) subfield, a flags (Flags) subfield, a start time (StartTime) subfield, a stop time (StopTime) subfield, and a CRC subfield. The ONU may determine the first BWMAP information by using the allocation structure2 field.

601b: The first OEO determines, based on the first BWMAP information, that the ONU is to send the ranging packet.

Optionally, the first OEO determines, based on at least one of the following, that the ONU is to send the ranging packet:
1. A difference between first start time and the stop time at which the ONU sends the ranging packet is equal to 12.
2. The flag (Flags) in the first BWMAP information indicates that the packet to be sent by the ONU does not carry the payload.
3. A location identifier in the first BWMAP information is less than 254.

For example, as shown in FIG. 3, the ONU corresponds to the allocation structure2 field. The first OEO may determine, based on at least one of the following, that the ONU is to send the ranging packet:
1. The first OEO determines that a difference between a value of the start time subfield and a value of the stop time subfield in the allocation structure2 field is equal to 12.
2. The first OEO determines that a value of the flags subfield indicates that the packet to be sent by the ONU does not carry the payload.
3. The first OEO determines that a value of a location identifier subfield is less than 254. In other words, the location identifier is less than 254. Usually, when ranging is performed between the ONU and the OLT, a location identifier used by the ONU is less than 254.

It should be noted that, in the technical solution of this embodiment, the first OEO processes the ranging packet and a non-ranging packet in different manners. For the manner of processing the ranging packet, refer to related descriptions in step 602. For the manner of processing the non-ranging packet, refer to related descriptions in step 606 to step 609. Therefore, before processing a packet, the first OEO should first determine a type of the packet to be sent by the ONU, and then process the packet in a corresponding processing manner.

Optionally, the embodiment shown in FIG. 6 further includes step 601c and step 601d. Step 601c and step 601d may be performed before step 602.

601c: The OLT determines the jitter elimination parameter of the first OEO.

The following describes two possible implementations of step 601c. This application is still applicable to another implementation, and the following implementations do not constitute any limitation on this application.

Implementation 1: The OLT uses the delay jitter of the first OEO as the jitter elimination parameter of the first OEO.

Specifically, the OLT may obtain the delay jitter of the first OEO, and use the delay jitter of the first OEO as the jitter elimination parameter of the first OEO.

Optionally, the delay jitter of the OEO is related to at least one of clock recovery precision, a clock tracing rate, or an external temperature of the OEO. It should be noted that OEOs of different manufacturers may have different delay jitters.

Implementation 2: The OLT uses a largest delay jitter in delay jitters respectively corresponding to the N levels of OEOs as the jitter elimination parameter of the first OEO.

In the implementation, the OLT selects the largest delay jitter as a jitter elimination parameter of each level of OEO with reference to the delay jitters respectively corresponding to the N levels of OEOs. In other words, each level of OEO uses the same jitter elimination parameter. The OLT may directly broadcast the jitter elimination parameter of each level of OEO. The implementation is simpler and more convenient.

601d: The OLT sends the jitter elimination parameter of the first OEO to the first OEO. Correspondingly, the first OEO receives the jitter elimination parameter of the first OEO from the OLT.

Optionally, the jitter elimination parameter of the first OEO may be carried in an extended PLOAM message or OMCI message, or the jitter elimination parameter of the first OEO may be carried in a newly defined PLOAM message or OMCI message. This is not specifically limited in this application. For example, the jitter elimination parameter of the first OEO is carried in a padding (padding) field in the PLOAM message. For example, the jitter elimination parameter of the first OEO includes the M bits or the first duration of the delay jitter of the first OEO. A bit value of the padding field in the PLOAM message indicates the M bits or the first duration. For example, a field is newly added to the PLOAM message, and the field indicates the jitter elimination parameter of the first OEO.

According to the implementation 1 in step 601c, the OLT may separately send the jitter elimination parameter of the first OEO to the first OEO.

According to the implementation 2 in step 601c, because the jitter elimination parameter of each level of OEO is the same, the OLT may broadcast the jitter elimination parameter of each level of OEO via a broadcast message. Each level of OEO obtains the jitter elimination parameter via the broadcast message.

It should be noted that there is no fixed execution sequence between steps 601c-601d and steps 601a-601b. Steps 601a-601b may be performed before steps 601c-601d; steps 601c-601d may be performed before steps 601a-601b; or steps 601a-step 601b and steps 601c-601d may be simultaneously performed based on situations. This is not specifically limited in this application.

Optionally, the embodiment shown in FIG. 6 further includes step 603 to step 605. Step 603 to step 605 may be performed after step 602.

603: The last-level OEO in the N levels of OEOs sends the ranging packet to the OLT. Correspondingly, the OLT receives the ranging packet from the last-level OEO in the N levels of OEOs.

As shown in FIG. 1, the OLT 101 and the ONU 111 are connected through two levels of OEOs, and the two levels of OEOs are the OEO 104 and the OEO 108. After the OEO 108 receives the ranging packet, the OEO 108 delays, based on a jitter elimination parameter of the OEO 108, for N bits or second duration from a receiving moment at which the OEO 108 receives the ranging packet. The N bits or the second duration is a delay jitter indicated by the jitter elimination parameter of the OEO 108, and N is an integer greater than or equal to 1. The first OEO is the OEO 104. After the OEO 104 receives the ranging packet, the OEO 104 delays, based on a jitter elimination parameter of the OEO 104, for the M bits or the first duration from a receiving moment at which the OEO 104 receives the ranging packet. The OLT 101 receives the ranging packet sent by the OEO 104.

604: The OLT determines, based on receiving time at which the OLT receives the ranging packet, the EQD corresponding to the ONU.

Specifically, as described in step 601a, the OLT sends the first downstream GTC frame to the ONU. The OLT determines an RTD between the OLT and the ONU based on the receiving time at which the OLT receives the ranging packet, sending start time at which the OLT sends the first downstream GTC frame, and the start time at which the ONU sends the ranging packet. Then, the OLT subtracts the RTD from transmission time *T_{eqd}* corresponding to a maximum access distance, to obtain the EQD corresponding to the ONU.

605: The OLT sends the EQD corresponding to the ONU to the ONU. Correspondingly, the ONU receives the EQD corresponding to the ONU from the OLT.

In this embodiment, because at least one (for example, the first OEO) of the N levels of OEOs performs delay processing on the ranging packet, the receiving time at which the OLT receives the ranging packet is delayed. However, the sending start time at which the OLT sends the first downstream GTC frame and the start time at which the ONU sends the ranging packet remain unchanged. Therefore, the RTD that is between the OLT and the ONU and that is obtained through calculation by the OLT increases. It can be learned from the foregoing descriptions that the EQD corresponding to the ONU is equal to *T_{eqd}* minus the RTD. *T_{eqd}* remains unchanged. In this embodiment, the RTD obtained through calculation by the OLT increases. Therefore, in this embodiment, the EQD that corresponds to the ONU and that is obtained through calculation by the OLT decreases. Therefore, the ONU transmits upstream data based on the EQD corresponding to the ONU. In a transmission process of the upstream data of the ONU, the upstream data of the ONU arrives at the first OEO in advance. For specific time by which the upstream data of the ONU arrives at the first OEO in advance and a process of processing the upstream data by the first OEO, refer to related descriptions in step 605 to step 609.

It can be learned that the first OEO receives the ranging packet of the ONU at the first moment. After the first OEO receives the ranging packet, the first OEO sends the ranging packet to the next-level OEO of the first OEO or the OLT after the delay of the M bits or the delay of the first duration from the first moment based on the jitter elimination parameter of the first OEO. The ranging packet is used by the OLT to determine the EQD corresponding to the ONU. The jitter elimination parameter of the first OEO is used to eliminate the delay jitter caused by the first OEO from receiving the data to sending the data. This helps the ONU subsequently transmit the upstream data based on the EQD, and the upstream data of the ONU arrives at the first OEO in advance. This helps the first OEO perform dejitter processing on the upstream data, to improve data transmission performance and improve stability of a PON system.

Optionally, the embodiment shown in FIG. 6 further includes step 606 to step 609. Step 606 to step 609 may be performed after step 605.

606: The first OEO receives a payload in an upstream burst frame of the ONU at a second moment.

If the first OEO is the 1^{st}-level OEO in the N levels of OEOs, the first OEO receives, at the second moment, the payload in the upstream burst frame sent by the ONU. If the first OEO is not the 1^{st}-level OEO in the N levels of OEOs, the first OEO receives the payload in the upstream burst frame of the ONU at the second moment.

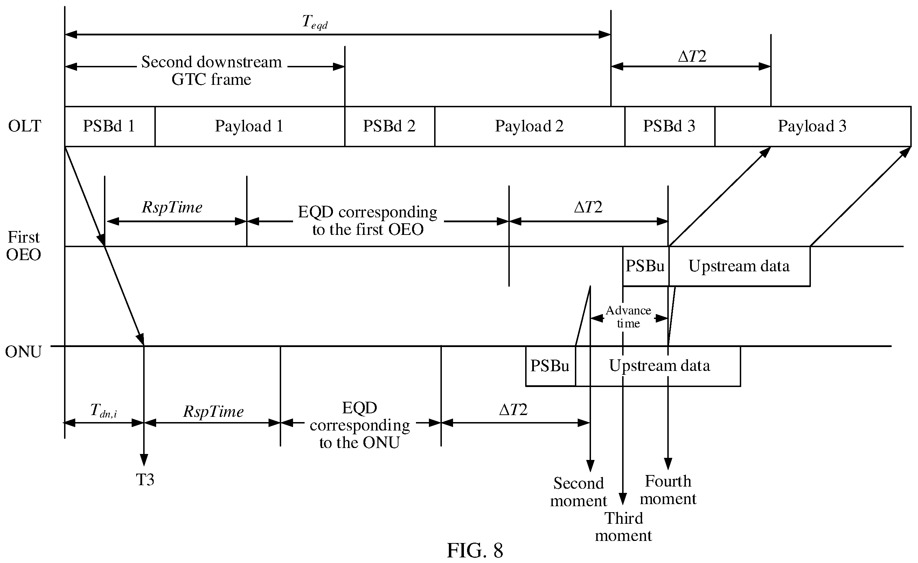

Specifically, the first OEO receives a preamble in the upstream burst frame before the second moment, and starts to receive the payload in the upstream burst frame of the ONU at the second moment. A length of the preamble in the upstream burst frame is S. For example, as shown in FIG. 8, the first OEO receives a PSBu frame header (that is, the preamble in the upstream burst frame) in the upstream burst frame of the ONU before the second moment, and starts to receive, at the second moment, the payload (that is, the upstream data shown in FIG. 8) in the upstream burst frame sent by the ONU. Because the EQD corresponding to the ONU decreases, and response time remains unchanged, start time of 125 µs in which the ONU sends the upstream burst frame is advanced. Δ*T*2 remains unchanged. In this case, it can be learned that the ONU sends the upstream data in the upstream burst frame in advance, and then time at which the first OEO receives the upstream data is also advanced. Specific advance time is a time interval between the second moment and a fourth moment. For the fourth moment and the time interval, refer to related descriptions in step 608.

607: The first OEO buffers a part or all of payloads in the upstream burst frame into a buffer of the first OEO.

The first OEO buffers, into the buffer of the first OEO, a payload that is in the upstream burst frame and that is received in the time interval between the second moment and the fourth moment. For the fourth moment, refer to the following related descriptions.

Optionally, the first OEO may also buffer the preamble in the upstream burst frame into the buffer.

608: The first OEO generates the preamble.

609: The first OEO sends the preamble to the next-level OEO of the first OEO or the OLT at a third moment, and sends the payload in the upstream burst frame to the next-level OEO of the first OEO or the OLT at the fourth moment.

A time interval between the third moment and the fourth moment is used by the first OEO to send the preamble. The second moment is a moment before the fourth moment, and the fourth moment is determined based on start time (StartTime2) that is included in second BWMAP information sent by the OLT and at which the ONU sends the payload in the upstream burst frame, and an EQD corresponding to the first OEO.

The following describes a process in which the first OEO determines the fourth moment.

The first OEO receives a second downstream GTC frame from the OLT. The second downstream GTC frame includes the second BWMAP information.

The second BWMAP information includes the start time (StartTime2) at which the ONU sends the payload in the upstream burst frame. The first OEO determines a receiving moment at which the first OEO receives the second downstream GTC frame. The first OEO determines the fourth moment based on the receiving moment, the response time, the start time at which the ONU sends the payload in the upstream burst frame, and the EQD corresponding to the first OEO. For a process of determining the EQD corresponding to the first OEO, refer to the ranging procedure in the foregoing related technical background. For example, as shown in FIG. 8, the receiving moment at which the first OEO receives the second downstream GTC frame is T3, and a moment after a receiving moment T4, the response time, the EQD corresponding to the first OEO, and Δ*T*2 is the fourth moment shown in FIG. 8, that is, a start moment at which the first OEO sends the payload in the upstream burst frame.

Specifically, the first OEO receives the upstream burst frame. The first OEO may buffer the payload (that is, the upstream data) that is in the upstream burst frame and that is received in the time interval between the second moment and the fourth moment. Then, the first OEO generates the preamble at the third moment, where the length of the preamble is S. The first OEO sends the preamble within the time interval between the third moment and the fourth moment. Then, the first OEO starts to send the payload in the buffer at the fourth moment, until the sending of the payload in the upstream burst frame is completed. The preamble and the payload form a complete upstream burst frame.

The time interval between the second moment and the fourth moment is advance time by which the payload in the upstream burst frame arrives at the first OEO in advance. Optionally, the time interval between the second moment and the fourth moment is less than or equal to the first duration. The first duration is equal to a unit rate of the PON system managed by the OLT multiplied by M. That is, the payload in the upstream burst frame arrives at the first OEO in advance by 0 to M bits, that is, a value of the delay jitter indicated by the jitter elimination parameter of the first OEO.

Therefore, the first OEO may buffer the payload that arrives in advance into the buffer. The first OEO sends the payload in the upstream burst frame at the fourth moment, and the fourth moment is irrelevant to the moment at which the first OEO receives the payload in the upstream burst frame, to eliminate the delay jitter caused by the first OEO. In addition, before sending the preamble, the first OEO regenerates a preamble, to implement zero preamble losses. In addition, burst interval overheads can be reduced, and bandwidth utilization can be improved. A light emitting conflict between the first OEO and an ONU connected to the previous-level OEO is avoided, thereby improving utilization of upstream bandwidth and the stability of the PON system. This avoids a bit error when the OLT decodes the upstream data, avoids an alarm generated by the OLT, and ensures stable running of the PON system.

Optionally, the embodiment shown in FIG. 6 further includes step 607a, and step 607a may be performed before step 607.

607a: The first OEO sets a size of the buffer of the first OEO based on the jitter elimination parameter of the first OEO.

The payload in the upstream burst frame arrives at the first OEO in advance, and specifically arrives at the first OEO in advance by the 0 to M bits, that is, the value of the delay jitter indicated by the jitter elimination parameter of the first OEO. Therefore, the first OEO may set the size of the buffer of the first OEO with reference to the jitter elimination parameter of the first OEO, and this helps the first OEO buffer the upstream data that arrives in advance, to implement the dejitter processing performed by the first OEO on the upstream data.

It should be noted that there is no fixed execution sequence between step 607a and step 606. Step 606 may be performed before step 607a; step 607a may be performed before step 606; or step 606 and step 607a may be simultaneously performed based on a situation. This is not specifically limited in this application.

If the another OEO in the N levels of OEOs also performs the delay processing process on the ranging packet, the another OEO may perform an upstream data processing process similar to that in step 606 to step 609, to eliminate a delay jitter caused by the another OEO. For example, if each of the N levels of OEOs performs the delay processing process on the ranging packet, each level of OEO may also perform an upstream data processing process similar to that in step 606 to step 609, to eliminate a delay jitter caused by each level of OEO.

FIG. 7 is a diagram of an embodiment of a communication processing method according to an embodiment of this application. Refer to FIG. 7. The method includes the following steps.

701: An ONU sends a ranging packet to an OLT. Correspondingly, the OLT receives the ranging packet from the ONU.

For example, as shown in FIG. 1, the OLT 101 may receive a ranging packet from the ONU 111.

702: The OLT determines, based on receiving time at which the OLT receives the ranging packet and a jitter elimination parameter of at least one of N levels of OEOs, an EQD corresponding to the ONU.

The jitter elimination parameter of the at least one level of OEO is used to eliminate a delay jitter caused by each of the at least one level of OEO from receiving data to sending data. The OLT is connected to the ONU through the N levels of OEOs, where N is an integer greater than or equal to 1. For example, as shown in FIG. 1, the OLT 101 and the ONU 111 are connected through two levels of OEOs, where a 1^{st}-level OEO is the OEO 108, and a 2^{nd}-level OEO is the OEO 104. The at least one level of OEO includes the OEO 108 and/or the OEO 104. In other words, the OLT may consider jitter elimination parameters of all levels of OEOs between the OLT and the ONU, and in a subsequent upstream data transmission process, this helps each level of OEO perform dejitter processing on upstream data, to eliminate the delay jitter caused by each level of OEO. Alternatively, the OLT may consider jitter elimination parameters of a part of levels of OEOs between the OLT and the ONU. In this case, in an upstream data processing process, the part of levels of OEOs perform dejitter processing on upstream data, to eliminate delay jitters caused by the part of levels of OEOs.

Specifically, as shown in FIG. 4, it can be learned from the foregoing descriptions of the related technical background of the ranging procedure that, before step 701, the OLT sends a first downstream GTC frame to the ONU. The OLT determines an RTD between the OLT and the ONU based on the receiving time at which the OLT receives the ranging packet, sending start time at which the OLT sends the first downstream GTC frame, and corresponding first start time at which the ONU sends the ranging packet. Jitter elimination parameters of the at least one level of OEO respectively indicate delay jitters of the at least one OEO. In step 702, the OLT may subtract the RTD from *T_{eqd}* , and then subtract a sum of the delay jitters respectively indicated by the jitter elimination parameters of the at least one level of OEO, to obtain the EQD corresponding to the ONU.

For example, as shown in FIG. 1, the at least one level of OEO includes the OEO 104 and the OEO 108. A jitter elimination parameter of the OEO 104 is the same as that of the OEO 108. For example, the delay jitter is R bits. Therefore, the OLT may determine that the EQD corresponding to the ONU is equal to *T_{eqd}* minus the RTD and duration A. The duration A is equal to a unit transmission rate of a PON system multiplied by 2R. For another example, the at least one level of OEO includes the OEO 104 and the OEO 108. A jitter elimination parameter of the OEO 104 includes duration 1 of a delay jitter of the OEO 104, and a jitter elimination parameter of the OEO 108 includes duration 2 of a delay jitter of the OEO 108. Therefore, the OLT may determine that the EQD corresponding to the ONU is equal to *T_{eqd}* minus the RTD and a sum of the duration 1 and the duration 2.

703: The OLT sends the EQD corresponding to the ONU to the ONU. Correspondingly, the ONU receives the EQD corresponding to the ONU from the OLT.

In this embodiment, it can be learned from step 702 that the OLT subtracts the RTD between the OLT and the ONU from *T_{eqd},* and then subtracts the sum of the delay jitters respectively indicated by the jitter elimination parameters of the at least one level of OEO, to obtain the EQD corresponding to the ONU. Therefore, compared with the EQD obtained through calculation by the OLT in the foregoing described related technical background, in this embodiment, the EQD that corresponds to the ONU and that is obtained through calculation by the OLT decreases. Therefore, in the upstream data transmission process of the ONU, the upstream data of the ONU arrives at the at least one level of OEO in advance. For specific time by which the upstream data of the ONU arrives at the at least one level of OEO in advance and a process of processing the upstream data by the at least one level of OEO, refer to related descriptions in step 704 to step 707.

Optionally, the embodiment shown in FIG. 7 further includes step 701a.

701a: The OLT sends a jitter elimination parameter corresponding to each level of OEO to each of the at least one level of OEO. Correspondingly, each of the at least one level of OEO receives the jitter elimination parameter corresponding to each level of OEO from the OLT.

Optionally, for related descriptions of a carrier of the jitter elimination parameter corresponding to each of the at least one level of OEO, refer to related descriptions in step 601d in the embodiment shown in FIG. 6. Details are not described herein again.

Specifically, the jitter elimination parameter corresponding to each of the at least one level of OEO may be the same or different, and specifically corresponds to two possible implementations shown in step 701b and step 701c.

Optionally, the following describes the two possible implementations in which the OLT determines the jitter elimination parameter corresponding to each level of OEO.

The following describes an implementation 1 with reference to step 701b. Optionally, the embodiment shown in FIG. 7 further includes step 701b. Step 701b may be performed before step 701a.

701b: The OLT uses a largest delay jitter in the delay jitters respectively corresponding to the at least one level of OEO as the jitter elimination parameter corresponding to each level.

Specifically, the OLT may obtain the delay jitter corresponding to each of the at least one level of OEO, and use the largest delay jitter as the jitter elimination parameter of each level of OEO. In this case, the jitter elimination parameter used by each level of OEO is the same, and the OLT may directly broadcast the jitter elimination parameter of each level of OEO.

The following describes an implementation 2 with reference to step 701c. Optionally, the embodiment shown in FIG. 7 further includes step 701c, and step 701c may be performed before step 701a.

701c: The OLT uses the delay jitter corresponding to each of the at least one level of OEO as the jitter elimination parameter corresponding to the OEO.

Specifically, the OLT may obtain the delay jitter corresponding to each of the at least one level of OEO, and use the delay jitter of each level of OEO as the jitter elimination parameter of the OEO. The OLT may separately send the jitter elimination parameter corresponding to the OEO to each level of OEO. In the implementation, different levels of OEOs may correspond to different jitter elimination parameters.

It can be learned that the OLT receives the ranging packet from the ONU. The OLT determines, based on the receiving time at which the OLT receives the ranging packet and the jitter elimination parameter of the at least one of the N levels of OEOs, the EQD corresponding to the ONU. The jitter elimination parameter of the at least one level of OEO is used to eliminate the delay jitter caused by each of the at least one level of OEO from receiving the data to sending the data. The OLT is connected to the ONU through the N levels of OEOs, where N is the integer greater than or equal to 1. The OLT sends the EQD corresponding to the ONU to the ONU. It can be learned that the OLT determines, with reference to the jitter elimination parameter of the at least one level of OEO, the EQD corresponding to the ONU. This helps the ONU subsequently transmit the upstream data based on the EQD, and the upstream data of the ONU arrives at the at least one level of OEO in advance. This helps a first OEO perform dejitter processing on the upstream data, to improve data transmission performance and improve stability of the PON system.

After the ONU obtains the EQD corresponding to the ONU in step 703, the ONU transmits the upstream data based on the EQD. In the upstream data transmission process of the ONU, the upstream data of the ONU arrives at the at least one level of OEO in advance. The at least one level of OEO includes the first OEO. With reference to step 704 to step 707, the following uses the first OEO as an example to describe a process of processing the upstream data by each of the at least one level of OEO.

Optionally, the embodiment shown in FIG. 7 further includes step 704 to step 707. Step 704 to step 707 may be performed after step 703.

704: The first OEO receives a payload in an upstream burst frame of the ONU at a first moment.

Step 704 is similar to step 606 in the embodiment shown in FIG. 6. The first moment is equivalent to the second moment in step 606. For details, refer to step 606 in the embodiment shown in FIG. 6.

705: The first OEO buffers a part or all of payloads in the upstream burst frame into a buffer of the first OEO.

706: The first OEO generates a preamble.

Step 705 and step 706 are similar to step 607 and step 608 in the embodiment shown in FIG. 6. For details, refer to related descriptions in step 607 and step 608.

707: The first OEO sends the preamble to a next-level OEO of the first OEO or the OLT at a second moment, and sends the payload in the upstream burst frame to the next-level OEO of the first OEO or the OLT at a third moment.

Step 707 is similar to step 609 in the embodiment shown in FIG. 6. The second moment is equivalent to the third moment in step 609. The third moment is equivalent to the fourth moment in step 609. For details, refer to related descriptions in step 609.

Optionally, the embodiment shown in FIG. 7 further includes step 705a. Step 705a may be performed before step 705.

705a: The first OEO sets a size of the buffer of the first OEO based on a jitter elimination parameter of the first OEO.

Step 705a is similar to step 607a in the embodiment shown in FIG. 6. For details, refer to related descriptions in step 607a in the embodiment shown in FIG. 6.

It can be learned that a time interval between the first moment and the third moment is advance time by which the payload in the upstream burst frame arrives at the first OEO in advance. The first OEO may buffer the payload that arrives in advance into the buffer. The first OEO sends the payload in the upstream burst frame at the third moment, and the third moment is irrelevant to the moment at which the first OEO receives the payload in the upstream burst frame, to eliminate a delay jitter caused by the first OEO. In addition, before sending the preamble, the first OEO regenerates a preamble, to implement zero preamble losses. In addition, burst interval overheads can be reduced, and a light emitting conflict between the first OEO and an ONU connected to a previous-level OEO can be avoided, thereby improving utilization of upstream bandwidth and the stability of the PON system. This avoids a bit error when the OLT decodes the upstream data, avoids an alarm generated by the OLT, and ensures stable running of the PON system.

If another OEO in the at least one level of OEO also performs a delay processing process on the ranging packet, the another OEO may perform an upstream data processing process similar to that in step 704 to step 707, to eliminate a delay jitter caused by the another OEO. For example, if each of the N levels of OEOs performs a delay processing process on the ranging packet, each level of OEO may also perform an upstream data processing process similar to that in step 704 to step 707, to eliminate the delay jitter caused by each level of OEO.

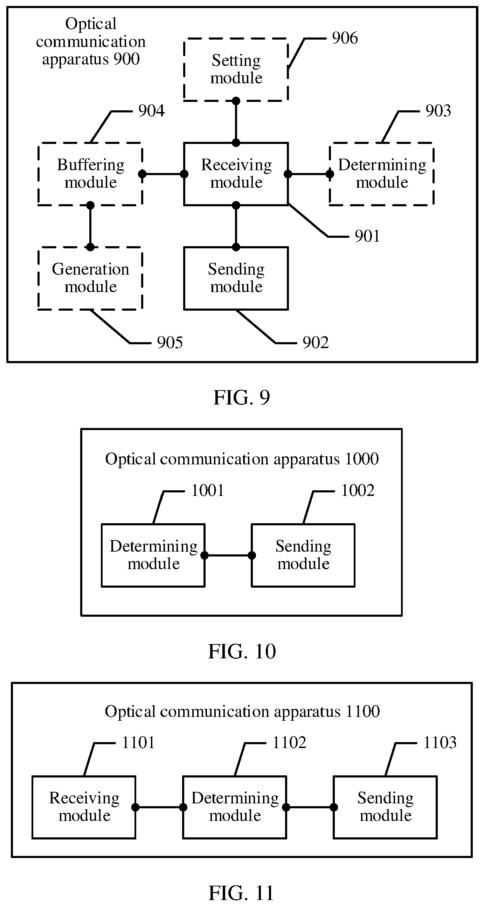

The foregoing describes the communication processing methods in embodiments of this application. The following describes optical communication apparatuses in embodiments of this application. FIG. 9 is a diagram of a first structure of an optical communication apparatus according to an embodiment of this application. Refer to FIG. 9. An optical communication apparatus 900 may be configured to perform a part or all of the steps performed by the first OEO in the embodiment shown in FIG. 6. The optical communication apparatus 900 includes a receiving module 901 and a sending module 902. Optionally, the optical communication apparatus 900 further includes a determining module 903, a buffering module 904, a generation module 905, and a setting module 906.

The receiving module 901 is configured to receive a ranging packet of an ONU at a first moment. The sending module 902 is configured to send the ranging packet to a next-level OEO of the optical communication apparatus 900 or an OLT after a delay of M bits or a delay of first duration from the first moment based on a jitter elimination parameter of the optical communication apparatus 900, where the ranging packet is used by the OLT to determine an EQD corresponding to the ONU, the jitter elimination parameter of the optical communication apparatus 900 is used to eliminate a delay jitter caused by the optical communication apparatus 900 from receiving data to sending data, the OLT is connected to the ONU through N levels of OEOs, the optical communication apparatus 900 is one of the N levels of OEOs, M is an integer greater than or equal to 1, and N is an integer greater than or equal to 1.

In a possible implementation, the receiving module 901 is further configured to receive the jitter elimination parameter of the optical communication apparatus 900 from the OLT.

In another possible implementation, the jitter elimination parameter of the optical communication apparatus 900 is carried in a PLOAM message or an OMCI message.

In another possible implementation, the receiving module 901 is further configured to receive first BWMAP information from the OLT, where the first BWMAP information includes at least one of the following: an upstream grant identifier of the ONU, a flag indicating whether a packet to be sent by the ONU carries a payload, start time at which the ONU sends the ranging packet, or stop time at which the ONU sends the ranging packet. The determining module 903 is configured to determine, based on the first BWMAP information, that the ONU is to send the ranging packet.

In another possible implementation, the receiving module 901 is further configured to receive an upstream burst frame of the ONU at a second moment. The buffering module 904 is configured to buffer a payload in the upstream burst frame into a buffer of the optical communication apparatus 900. The generation module 905 is configured to generate a preamble. The sending module 902 is further configured to: send the preamble to the next-level OEO of the optical communication apparatus 900 or the OLT at a third moment, and send the payload in the upstream burst frame to the next-level OEO of the optical communication apparatus 900 or the OLT at a fourth moment. A time interval between the third moment and the fourth moment is used by the optical communication apparatus 900 to send the preamble. The second moment is a moment before the fourth moment, and the fourth moment is determined based on start time that is included in second BWMAP information sent by the OLT and at which the ONU sends the payload, and an EQD corresponding to the optical communication apparatus 900.

In another possible implementation, a time interval between the second moment and the fourth moment is less than or equal to the first duration.

In another possible implementation, the setting module 906 is configured to set a size of the buffer based on the jitter elimination parameter of the optical communication apparatus 900.

In another possible implementation, the receiving module 901 is further configured to receive the second BWMAP information from the OLT, where the second BWMAP information includes the start time at which the ONU sends the payload in the upstream burst frame. The determining module 903 is configured to determine the fourth moment based on the start time at which the ONU sends the payload in the upstream burst frame and the EQD corresponding to the optical communication apparatus.

The foregoing describes the communication processing methods in embodiments of this application. The following describes the optical communication apparatuses in embodiments of this application. FIG. 10 is a diagram of a second structure of an optical communication apparatus according to an embodiment of this application. Refer to FIG. 10. An optical communication apparatus 1000 may be configured to perform a part or all of the steps performed by the OLT in the embodiment shown in FIG. 6. The optical communication apparatus 1000 includes a determining module 1001 and a sending module 1002.

The determining module 1001 is configured to determine a jitter elimination parameter of a first OEO. The jitter elimination parameter of the first OEO is used to eliminate a delay jitter caused by the first OEO from receiving data to sending data, the optical communication apparatus 1000 is connected to an ONU through N levels of OEOs, the first OEO is one of the N levels of OEOs, and N is an integer greater than or equal to 1. The sending module 1002 is configured to send the jitter elimination parameter of the first OEO to the first OEO.

In a possible implementation, the determining module 1001 is specifically configured to: use the delay jitter of the first OEO as the jitter elimination parameter of the first OEO; or use a largest delay jitter in delay jitters respectively corresponding to the N levels of OEOs as the jitter elimination parameter of the first OEO.

In another possible implementation, the jitter elimination parameter of the first OEO is carried in a PLOAM message or an OMCI message.

The foregoing describes the communication processing methods in embodiments of this application. The following describes the optical communication apparatuses in embodiments of this application. FIG. 11 is a diagram of a third structure of an optical communication apparatus according to an embodiment of this application. Refer to FIG. 11. An optical communication apparatus 1100 may be configured to perform a part or all of the steps performed by the OLT in the embodiment shown in FIG. 7. The optical communication apparatus 1100 includes a receiving module 1101, a determining module 1102, and a sending module 1103.

The receiving module 1101 is configured to receive a ranging packet from an ONU. The determining module 1102 is configured to determine, based on receiving time at which the optical communication apparatus 1100 receives the ranging packet and a jitter elimination parameter of at least one of N levels of OEOs, an EQD corresponding to the ONU, where the jitter elimination parameter of the at least one level of OEO is used to eliminate a delay jitter caused by each of the at least one level of OEO from receiving data to sending data, the optical communication apparatus 1100 is connected to the ONU through the N levels of OEOs, and N is an integer greater than or equal to 1. The sending module 1103 is configured to send the EQD corresponding to the ONU to the ONU.

In a possible implementation, the determining module 1102 is specifically configured to: determine an RTD between the optical communication apparatus 1100 and the ONU based on the receiving time; and subtract the RTD from transmission time corresponding to a maximum access distance of the optical communication apparatus 1100, and then subtract a sum of delay jitters respectively indicated by at least one level of jitter elimination parameter, to obtain the EQD corresponding to the ONU.

In another possible implementation, the determining module 1102 is further configured to use the delay jitter corresponding to each of the at least one level of OEO as a jitter elimination parameter corresponding to the OEO. The sending module 1103 is further configured to send the jitter elimination parameter corresponding to the OEO to the OEO.

In another possible implementation, the determining module 1102 is further configured to use a largest delay jitter in delay jitters respectively corresponding to the at least one level of OEO as a jitter elimination parameter corresponding to each of the at least one level of OEO. The sending module 1103 is further configured to send the jitter elimination parameter corresponding to each level of OEO to each level of OEO.

In another possible implementation, the jitter elimination parameter corresponding to each of the at least one level of OEO is carried in a PLOAM message or an OMCI message.

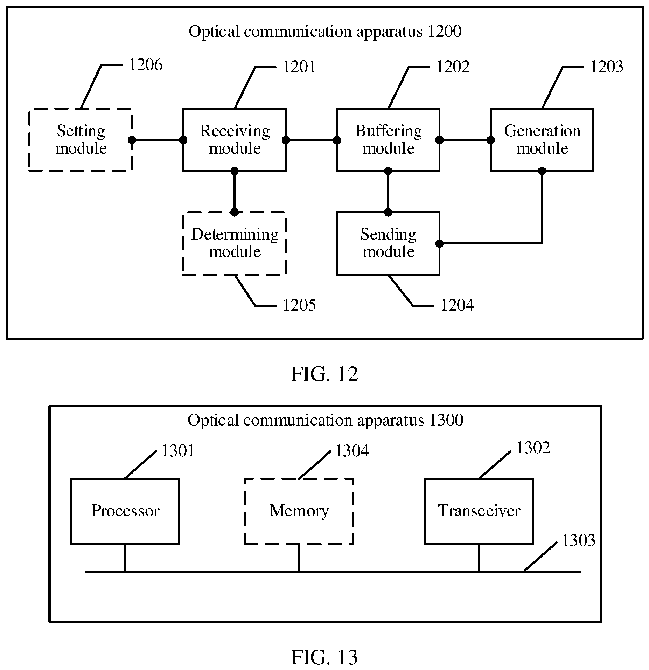

The foregoing describes the communication processing methods in embodiments of this application. The following describes the optical communication apparatuses in embodiments of this application. FIG. 12 is a diagram of a fourth structure of an optical communication apparatus according to an embodiment of this application. Refer to FIG. 12. An optical communication apparatus 1200 may be configured to perform a part or all of the steps performed by the first OEO in the embodiment shown in FIG. 7. The optical communication apparatus 1200 includes a receiving module 1201, a buffering module 1202, a generation module 1203, and a sending module 1204. Optionally, the optical communication apparatus 1200 further includes a determining module 1205 and a setting module 1206.

The receiving module 1201 is configured to receive an upstream burst frame of an ONU at a first moment. The buffering module 1202 is configured to buffer a payload in the upstream burst frame into a buffer of the optical communication apparatus 1200. The generation module 1203 is configured to generate a preamble. The sending module 1204 is configured to: send the preamble to a next-level OEO of the optical communication apparatus 1200 or an OLT at a second moment, and send the payload in the upstream burst frame to the next-level OEO of the optical communication apparatus 1200 or the OLT at a third moment. A time interval between the second moment and the third moment is used by the optical communication apparatus 1200 to send the preamble, the first moment is a moment before the third moment, and the third moment is determined based on start time that is included in first BWMAP information sent by the OLT and at which the ONU sends the payload, and an EQD corresponding to the optical communication apparatus 1200. The optical communication apparatus 1200 is one of N levels of OEOs, and the OLT is connected to the ONU through the N levels of OEOs, where N is an integer greater than or equal to 1.

In a possible implementation, a time interval between the first moment and the third moment is less than or equal to first duration, and the first duration is duration corresponding to a delay jitter indicated by a jitter elimination parameter of the optical communication apparatus 1200.

In another possible implementation, the receiving module 1201 is further configured to receive the first BWMAP information from the OLT, where the first BWMAP information includes the corresponding start time at which the ONU sends the payload. The determining module 1205 is configured to determine the third moment based on the start time and the EQD corresponding to the optical communication apparatus 1200.

In another possible implementation, the receiving module 1201 is further configured to receive the jitter elimination parameter of the optical communication apparatus 1200 from the OLT. The setting module 1206 is configured to set a size of the buffer based on the jitter elimination parameter of the optical communication apparatus 1200.

This application further provides another optical communication apparatus. FIG. 13 is a diagram of a fifth structure of an optical communication apparatus according to an embodiment of this application. An optical communication apparatus 1300 may be the OLT in the foregoing method embodiments. Alternatively, an optical communication apparatus 1300 may be the first OEO in the foregoing method embodiments.

Specifically, the optical communication apparatus 1300 shown in this embodiment includes a processor 1301, a transceiver 1302, and a bus 1303. Optionally, the optical communication apparatus 1300 further includes a memory 1304.

Specifically, the memory 1304 may include a computer storage medium in a form of a volatile memory and/or a non-volatile memory, for example, a read-only memory and/or a random access memory. The memory 1304 may store an operating system, an application program, another program module, executable code, and program data.

The transceiver 1302 may be configured to input a command and information to the optical communication apparatus 1300, and the transceiver 1302 may be connected to the processor 1301 through the bus 1303. The transceiver 1302 may be further configured to output information from or input information to the optical communication apparatus 1300.

When the processor 1301 in the optical communication apparatus 1300 executes the executable code or the application program stored in the memory 1304, the optical communication apparatus 1300 may perform method operations on any side in the foregoing method embodiments. For a specific execution process, refer to the foregoing method embodiments. Details are not described herein again.

For example, the receiving module 901 and the sending module 902 in the optical communication apparatus 900 shown in FIG. 9 may be used as the transceiver 1302 shown in FIG. 13. The determining module 903, the buffering module 904, the generation module 905, and the setting module 906 in the optical communication apparatus 900 may be used as the processor 1301 shown in FIG. 13.

For example, the determining module 1001 in the optical communication apparatus 1000 shown in FIG. 10 may be used as the processor 1301 shown in FIG. 13. The sending module 1002 in the optical communication apparatus 1000 may be used as the transceiver 1302 shown in FIG. 13.

For example, the receiving module 1101 and the sending module 1103 in the optical communication apparatus 1100 shown in FIG. 11 may be used as the transceiver 1302 shown in FIG. 13. The determining module 1102 in the optical communication apparatus 1100 may be used as the processor 1301 shown in FIG. 13.

For example, the receiving module 1201 and the sending module 1204 in the optical communication apparatus 1200 shown in FIG. 12 may be used as the transceiver 1302 shown in FIG. 13. The buffering module 1202, the generation module 1203, the determining module 1205, and the setting module 1206 in the optical communication apparatus 1200 may be used as the processor 1301 shown in FIG. 13.

An embodiment of this application further provides an optical communication system. The optical communication system includes an OLT and a first OEO. The OLT is configured to perform a part or all of the steps performed by the OLT in the embodiment shown in FIG. 6, and the first OEO is configured to perform a part or all of the steps performed by the first OEO in the embodiment shown in FIG. 6. Alternatively, the OLT is configured to perform a part or all of the steps performed by the OLT in the embodiment shown in FIG. 7, and the first OEO is configured to perform a part or all of the steps performed by the first OEO in the embodiment shown in FIG. 7.

An embodiment of this application further provides a computer program product including instructions. When the computer program product runs on a computer, the computer is enabled to perform the methods in the embodiments shown in FIG. 6 and FIG. 7.

An embodiment of this application further provides a computer-readable storage medium, including computer instructions. When the computer instructions are run on a computer, the computer is enabled to perform the methods in the embodiments shown in FIG. 6 and FIG. 7.

An embodiment of this application further provides a chip, including a processor, configured to invoke a program stored in a memory, to enable the processor to perform the methods in the embodiments shown in FIG. 6 and FIG. 7.

Optionally, the chip further includes the memory, and the memory and the processor are interconnected through a line.

The processor mentioned anywhere above may be a general-purpose central processing unit, a microprocessor, an application-specific integrated circuit (application-specific integrated circuit, ASIC), or one or more integrated circuits configured to control program execution of the methods in the embodiments shown in FIG. 6 and FIG. 7. The memory mentioned anywhere above may be a read-only memory (read-only memory, ROM), another type of static storage device that can store static information and instructions, a random access memory (random access memory, RAM), or the like.

The foregoing embodiments are merely intended for describing the technical solutions in this application, but not for limiting this application. Although this application is described in detail with reference to the foregoing embodiments, persons of ordinary skill in the art should understand that they may still make modifications to the technical solutions recorded in the foregoing embodiments or make equivalent replacements to some technical features thereof. Such modifications or replacements do not make the essence of the corresponding technical solutions depart from the spirit and the scope of the technical solutions of embodiments of this application.

## Claims

1. A communication processing method, wherein the method comprises:
receiving, by a first optical-electrical-optical converter OEO, a ranging packet of an optical network unit ONU at a first moment; and
sending, by the first OEO, the ranging packet to a next-level OEO of the first OEO or an optical line termination OLT after a delay of M bits or a delay of first duration from the first moment based on a jitter elimination parameter of the first OEO, wherein
the ranging packet is used by the OLT to determine an equalization delay EQD corresponding to the ONU, the jitter elimination parameter of the first OEO is used to eliminate a delay jitter caused by the first OEO from receiving data to sending data, the OLT is connected to the ONU through N levels of OEOs, the first OEO is one of the N levels of OEOs, M is an integer greater than or equal to 1, and N is an integer greater than or equal to 1.

2. The method according to claim 1, wherein the method further comprises:
receiving, by the first OEO, the jitter elimination parameter of the first OEO from the OLT.

3. The method according to claim 2, wherein the jitter elimination parameter of the first OEO is carried in a physical layer operation, administration and maintenance PLOAM message or an optical network terminal management and control interface OMCI message.

4. The method according to any one of claims 1 to 3, wherein before the receiving, by a first OEO, a ranging packet of an optical network unit at a first moment, the method further comprises:
receiving, by the first OEO, first bandwidth map BWMAP information from the OLT, wherein the first BWMAP information comprises at least one of the following: an upstream grant identifier of the ONU, a flag indicating whether a packet to be sent by the ONU carries a payload, start time at which the ONU sends the ranging packet, or stop time at which the ONU sends the ranging packet; and
determining, by the first OEO based on the first BWMAP information, that the ONU is to send the ranging packet.

5. The method according to any one of claims 1 to 4, wherein the method further comprises:
receiving, by the first OEO, an upstream burst frame of the ONU at a second moment;
buffering, by the first OEO, a payload in the upstream burst frame into a buffer of the first OEO;
generating, by the first OEO, a preamble; and
sending, by the first OEO, the preamble to the next-level OEO of the first OEO or the OLT at a third moment, and sending the payload in the upstream burst frame to the next-level OEO of the first OEO or the OLT at a fourth moment, wherein
a time interval between the third moment and the fourth moment is used by the first OEO to send the preamble, the second moment is a moment before the fourth moment, and the fourth moment is determined based on start time that is in second bandwidth map BWMAP information sent by the OLT and that is used to indicate that the ONU sends the payload, and an equalization delay EQD corresponding to the first OEO.

6. The method according to claim 5, wherein a time interval between the second moment and the fourth moment is less than or equal to the first duration.

7. The method according to claim 5 or 6, wherein the method further comprises:
setting, by the first OEO, a size of the buffer based on the jitter elimination parameter of the first OEO.

8. The method according to any one of claims 5 to 7, wherein the method further comprises:
receiving, by the first OEO, the second BWMAP information from the OLT, wherein the second BWMAP information comprises the start time at which the ONU sends the payload in the upstream burst frame; and
determining, by the first OEO, the fourth moment based on the start time at which the ONU sends the payload in the upstream burst frame and the EQD corresponding to the first OEO.

9. A communication processing method, wherein the method comprises:
determining, by an OLT, a jitter elimination parameter of a first OEO, wherein the jitter elimination parameter of the first OEO is used to eliminate a delay jitter caused by the first OEO from receiving data to sending data, the OLT is connected to an optical network unit ONU through N levels of OEOs, the first OEO is one of the N levels of OEOs, and N is an integer greater than or equal to 1; and
sending, by the OLT, the jitter elimination parameter of the first OEO to the first OEO.

10. The method according to claim 9, wherein the determining, by an OLT, a jitter elimination parameter of a first OEO comprises:
using, by the OLT, the delay jitter of the first OEO as the jitter elimination parameter of the first OEO; or
using, by the OLT, a largest delay jitter in delay jitters respectively corresponding to the N levels of OEOs as the jitter elimination parameter of the first OEO.

11. The method according to claim 9 or 10, wherein the jitter elimination parameter of the first OEO is carried in a physical layer operation, administration and maintenance PLOAM message or an optical network terminal management and control interface OMCI message.

12. An optical communication apparatus, wherein the optical communication apparatus comprises:
a receiving module, configured to receive a ranging packet of an optical network unit ONU at a first moment; and
a sending module, configured to send the ranging packet to a next-level optical-electrical-optical converter OEO of the optical communication apparatus or an optical line termination OLT after a delay of M bits or a delay of first duration from the first moment based on a jitter elimination parameter of the optical communication apparatus, wherein
the ranging packet is used by the OLT to determine an equalization delay EQD corresponding to the ONU, the jitter elimination parameter of the optical communication apparatus is used to eliminate a delay jitter caused by the optical communication apparatus from receiving data to sending data, the OLT is connected to the ONU through N levels of OEOs, the optical communication apparatus is one of the N levels of OEOs, M is an integer greater than or equal to 1, and N is an integer greater than or equal to 1.

13. The optical communication apparatus according to claim 12, wherein the receiving module is further configured to:
receive the jitter elimination parameter of the optical communication apparatus from the OLT.

14. The optical communication apparatus according to claim 13, wherein the jitter elimination parameter of the optical communication apparatus is carried in a physical layer operation, administration and maintenance PLOAM message or an optical network terminal management and control interface OMCI message.

15. The optical communication apparatus according to any one of claims 12 to 14, wherein the receiving module is further configured to:
receive first bandwidth map BWMAP information from the OLT, wherein the first BWMAP information comprises at least one of the following: an upstream grant identifier of the ONU, a flag indicating whether a packet to be sent by the ONU carries a payload, start time at which the ONU sends the ranging packet, or stop time at which the ONU sends the ranging packet;
the optical communication apparatus further comprises a determining module; and
the determining module is configured to determine, based on the first BWMAP information, that the ONU is to send the ranging packet.

16. The optical communication apparatus according to any one of claims 12 to 15, wherein the receiving module is further configured to:
receive an upstream burst frame of the ONU at a second moment;
the optical communication apparatus further comprises a buffering module and a generation module;
the buffering module is configured to buffer a payload in the upstream burst frame into a buffer of the optical communication apparatus;
the generation module is configured to generate a preamble; and
the sending module is further configured to: send the preamble to the next-level OEO of the optical communication apparatus or the OLT at a third moment, and send the payload in the upstream burst frame to the next-level OEO of the optical communication apparatus or the OLT at a fourth moment, wherein
a time interval between the third moment and the fourth moment is used by the optical communication apparatus to send the preamble, the second moment is a moment before the fourth moment, and the fourth moment is determined based on start time that is in second bandwidth map BWMAP information sent by the OLT and that is used to indicate that the ONU sends the payload, and an equalization delay EQD corresponding to the optical communication apparatus.

17. The optical communication apparatus according to claim 16, wherein a time interval between the second moment and the fourth moment is less than or equal to the first duration.

18. The optical communication apparatus according to claim 16 or 17, wherein the optical communication apparatus further comprises a setting module; and
the setting module is configured to set a size of the buffer based on the jitter elimination parameter of the optical communication apparatus.

19. The optical communication apparatus according to any one of claims 16 to 18, wherein the receiving module is further configured to:
receive the second BWMAP information from the OLT, wherein the second BWMAP information comprises the start time at which the ONU sends the payload in the upstream burst frame;
the optical communication apparatus further comprises the determining module; and
the determining module is configured to determine the fourth moment based on the start time at which the ONU sends the payload in the upstream burst frame and the EQD corresponding to the optical communication apparatus.

20. An optical communication apparatus, wherein the optical communication apparatus comprises:
a determining module, configured to determine a jitter elimination parameter of a first OEO, wherein the jitter elimination parameter of the first OEO is used to eliminate a delay jitter caused by the first OEO from receiving data to sending data, the optical communication apparatus is connected to an optical network unit ONU through N levels of OEOs, the first OEO is one of the N levels of OEOs, and N is an integer greater than or equal to 1; and
a sending module, configured to send the jitter elimination parameter of the first OEO to the first OEO.

21. The optical communication apparatus according to claim 20, wherein the determining module is specifically configured to:
use the delay jitter of the first OEO as the jitter elimination parameter of the first OEO; or
use a largest delay jitter in delay jitters respectively corresponding to the N levels of OEOs as the jitter elimination parameter of the first OEO.

22. The optical communication apparatus according to claim 20 or 21, wherein the jitter elimination parameter of the first OEO is carried in a physical layer operation, administration and maintenance PLOAM message or an optical network terminal management and control interface OMCI message.

23. An optical communication system, wherein the optical communication system comprises an optical line termination OLT, an optical network unit ONU, and N levels of optical-electrical-optical converters OEOs, the OLT is connected to the ONU through the N levels of OEOs, N is an integer greater than or equal to 1, and at least one of the N levels of OEOs performs the method according to any one of claims 1 to 8.

24. The optical communication system according to claim 23, wherein the OLT performs the method according to any one of claims 9 to 11.

25. An optical communication apparatus, wherein the optical communication apparatus comprises a processor, and the processor is configured to execute a computer program or computer instructions in a memory, to perform the method according to any one of claims 1 to 8, or to perform the method according to any one of claims 9 to 11.

26. The optical communication apparatus according to claim 25, wherein the optical communication apparatus further comprises the memory.

27. A computer-readable storage medium, wherein the computer-readable storage medium stores a computer program, and when the computer program is executed by a communication apparatus, the communication apparatus is enabled to perform the method according to any one of claims 1 to 8, or the communication apparatus is enabled to perform the method according to any one of claims 9 to 11.
